# EUROPÄISCHE PATENTSCHRIFT

(11) **EP 2 874 772 B1**
(45) Veröffentlichungstag und Bekanntmachung des Hinweises auf die Patenterteilung: **20.04.2016**
(21) Anmeldenummer: 13792349.6
(22) Anmeldetag: 14.11.2013
(51) Int. Cl.: B23B 31/16, B23B 31/177

(54) **AUSGLEICHSSPANNFUTTER**
COMPENSATING CHUCK
MANDRIN DE SERRAGE À COMPENSATION

(30) Priorität: 25.01.2013 DE 102013201231
(43) Veröffentlichungstag der Anmeldung: 27.05.2015
(73) Patentinhaber: Henke, Volker, 28876 Oyten (DE)
(72) Erfinder: MEYER, Jens, 28876 Oyten (DE)
(74) Vertreter: Eisenführ Speiser
(86) Internationale Anmeldenummer: PCT/EP2013/073875
(87) Internationale Veröffentlichungsnummer: WO 2014/114380

(56) Entgegenhaltungen:
- WO-A1-98/36862
- WO-A1-2011/137884
- DE-A1- 4 016 527
- DE-A1-102004 001 839
- DE-B- 1 066 071
- US-A- 1 713 803
- US-A- 1 727 535

## Beschreibung

Die vorliegende Erfindung betrifft ein Ausgleichsspannfutter zum zentrischen Einspannen von Werkstücken, gemäß dem Oberbegriff des Anspruchs 1. Ein solches Ausgleichsspannfutter ist aus der DE 40 16 527 A1 bekannt.

Spannfutter der vorstehend bezeichneten Art werden auch als Vierbackenfutter bzw. Vierbackenspannfutter bezeichnet. Spannfutter zum zentrischen Spannen sind grundsätzlich immer dann erforderlich, wenn Werkstücke in Werkzeugmaschinen oder zur maschinellen Bearbeitung eingespannt werden müssen, die insbesondere rotatorisch bearbeitet werden. In modernen Fertigungsumgebungen gibt es zunehmend Bedarf nach Spannvorrichtungen, die sowohl zum Drehen als auch zum Fräsen eingesetzt werden können. Mithin betrifft die Erfindung ein Spannfutter für solche Einsatzzwecke. Der Grund, überhaupt über den Einsatz von Vierbackenfuttern gegenüber Dreibackenfuttern nachzudenken, liegt darin, dass bei einer höheren Anzahl von Spannbacken, die das Werkstück umgreifen, die Punktlast auf jede einzelne Spannbacke reduziert wird. Infolgedessen werden bei größerer Anzahl von Spannbacken die auf das Werkstück wirkenden und das Werkstück folglich deformierenden Kräfte gleichmäßiger über den Umfang des Werkstücks verteilt. Hierdurch steigt die Maßhaltigkeit des Werkstücks nach Bearbeitung.

Aus dem Stand der Technik sind Vierbackenspannfutter bekannt, die zentrisch spannen. Diese weisen jedoch im Allgemeinen den Nachteil auf, dass sie nur zum Spannen runder Werkstücke geeignet sind bzw. in beiden Spannbackenebenen spiegelsymmetrisch sein müssen, damit alle vier Backen an das Werkstück beim Spannen eingreifen können. Solche starr zentrisch spannenden Spannfutter haben aufgrund eines fehlenden Ausgleichs bezüglich der Werkstückgeometrie nur eingeschränkten Praxisnutzen bei "unrunden" Werkstücken.

Es sind ferner aus dem Stand der Technik auch Vierbacken-Ausgleichsspannfutter bekannt, welche allerdings auch entscheidende Nachteile aufweisen. Bei vielen Vierbackenfuttern mit Ausgleichsfunktion die Wiederholgenauigkeit des zentrischen Spannens eingeschränkt.

Druckschrift WO2011/137884A1 offenbart beispielsweise ein Vierbackenspannfutter mit einer Ausgleichsfunktion dergestalt, dass benachbarte Spannbacken des Spannfutters über eine oder mehrere Pendelstangen miteinander gekoppelt sind. Wird bei einem nicht rotationssymmetrischen Werkstück zunächst ein erstes Paar von Spannbacken mit dem Werkstück in Kontakt gebracht, während das andere Paar von Spannbacken noch nicht in Kontakt steht, werden die entsprechenden Pendelstangen ausgelenkt und sukzessive das zweite Spannbackenpaar an das Werkstück angenähert. Diese kinematische Lösung weist den Nachteil auf, dass aufgrund der zwangsläufig in Kauf zu nehmenden Hebellängen zwischen Antriebskraft und Spannbacke eine gewisse Elastizität im System vorhanden ist und Antriebskraftveriuste auftreten. Die hohe Teilekomplexität macht die Systeme ferner potentiell störanfällig.

Ein weitere Ansatz des Ausgleichs bei Vierbackenspannfuttern findet sich im Bereich der mittel Kraftspannung betätigbaren Spannfutter. DE 10 2004 001 839 A1 offenbart ein Vierbackenspannfutter, bei welchem durch einen Spannzylinder die vier Spannbacken entlang konischer Gleitflächen gezogen werden. Eine hydraulisch oder mechanisch ausgeführte Kraftumlenkung führt zum Verschieben konischer Ausgleichselemente entgegen der Spannrichtung, die ein Annähern von noch nicht in Kontakt befindlichen Spannbacken an das Werkstück ermöglichen sollen. Bei diesem System wird insbesondere als Nachteil angesehen, dass der maximal mögliche Ausgleichsweg äußert gering ist und die Baugröße der Spannvorrichtung insgesamt für bestimmte Einsatzzwecke unzulässig hoch ist. Zudem ist das System wieder für den Handspannbetrieb geeignet.

Vor diesem Hintergrund lag der vorliegenden Erfindung die Aufgabe zugrunde, ein Spannfutter anzugeben, welches die vorstehend genannten Nachteile möglichst weitgehend abmildert. Insbesondere lag der Erfindung die Aufgabe zugrunde, ein Ausgleichsspannfutter anzugeben, welches eine zuverlässige Zentrierung gewährleistet und gleichzeitig einen möglichst großen Ausgleichsbereich zur Verfügung stellt.

Die Erfindung löst die ihr zugrunde liegende Aufgabe durch ein Ausgleichsspannfutter mit den Merkmalen des Anspruchs 1.

In einem ersten Aspekt wird die Erfindung dadurch weitergebildet, dass diejenigen Mitnehmer, welche jeweils diametral gegenüberliegenden Grundbacken zugeordnet sind, jeweils relativ zueinander starr sind. Die Erfindung macht sich hierbei die Erkenntnis zunutze, dass eine starre Kopplung jeweils eines Paares von Mitnehmern miteinander in Kombination mit der Relativbeweglichkeit der Mitnehmerpaare gegeneinander dafür sorgt, dass durch Antrieb der Antriebseinheit beide Paare relativ zueinander bewegt werden können, wodurch bei gleichzeitiger Bewegung beider Mitnehmerpaare relativ zueinander (mit gleichen Bewegungsanteilen) alle vier Grundbacken gleichförmig radial aufeinander zu oder voneinander weg bewegt werden. Ferner ermöglicht die Beweglichkeit der Antriebseinheit innerhalb des Gehäuses eine Ausgleichsbewegung, d.h. Relativbewegung der Grundbacken zueinander, wenn ein nicht vollständig rotationssymmetrisches Werkstück in das Spannfutter eingelegt ist. Der Vorteil der Erfindung und die erfindungsgemäße Funktionsweise werden aus den folgenden beiden Fallkonstellationen deutlich: Indem die Mitnehmer derart mit jeweils einer der Grundbacken gekoppelt sind, dass eine Relativbewegung beider Paare von Mitnehmern zueinander, also eine Bewegung beider Mitnehmerpaare gleichzeitig, eine gleichförmige Bewegung benachbarter Grundbacken hervorruft, erfolgt eine zentrische Spannbewegung aller Grundbacken, solange keine der Grundbacken in seiner Bewegung behindert ist. Wenn aber das erste der beiden Grundbackenpaare Kontakt mit dem Werkstück hat, wird es in seiner Bewegung behindert. Eine weitere Relativbewegung der Mitnehmerpaare ist allerdings hierdurch nicht verhindert; aufgrund der vorstehend genannten Koppelung haben sich bis zum Auftreten der Behinderung die Spannbacken bzw. Grundbacken zentrisch aufeinander zubewegt. Genauer gesagt bewegen sich diametral gegenüberliegende Grundbacken immer zentrisch aufeinander zu. Tritt also, beispielsweise durch Erreichen des Werkstückes, eine Behinderung eines ersten Grundbackenpaares auf, ist das Werkstück in dieser Ebene bereits zentriert. Die Weiterbewegung des zweiten Grundbackenpaares wird ermöglicht, indem die Mitnehmerpaare beweglich, vorzugsweise gleitend, besonders bevorzugt spielfrei, in dem Gehäuse ausweichen können. Während also eines der Mitnehmerpaare aufgrund der erreichten Spannlage stehen bleibt, bewegt sich das zweite Mitnehmerpaar relativ zu dem ersten Mitnehmerpaar weiter, wobei zur Kompensation und Wahrung der Zentrizität die Antriebseinheit mit bewegt wird.

Bei einer reinen synchronen (Gleit-)Bewegung der Mitnehmer in der gleichen Richtung ohne simultane Relativbewegung der Mitnehmer zueinander wird immer ein Grundbackenpaar zum Zentrum symmetrisch, d.h. zentrisch, nach innen, das andere zum Zentrum symmetrisch nach außen bewegt. Durch die erfindungsgemäße Bereitstellung der Antriebseinheit und entsprechende Kopplung der Mitnehmer mit den Grundbacken wird eine sehr hohe Wiederholgenauigkeit bezüglich der Zentrizität des Spannens erreicht. Die Amplitude des maximalen Ausgleichs der Grundbacken untereinander ist die Größe des Bewegungsspiels der Mitnehmerpaare im Gehäuse ausschlaggebend. Sie kann somit in weiten Grenzen variiert werden.

Die Erfindung wird dadurch vorteilhaft weitergebildet, dass das Getriebe ein mit der Antriebseinheit gekoppeltes Kulissengetriebe aufweist. Unter einem Kulissengetriebe wird hierbei eine Mehrzahl von miteinander zur Übertragung von Antriebskräften verbundenen Getriebegliedern verstanden, von denen eines, mehrere oder sämtliche Getriebeglieder jeweils in einer Kulissenführung geführt beweglich sind. Besonders bevorzugt wird im Rahmen der Erfindung gemäß dem ersten Aspekt ein Kulissengetriebe vorgesehen, welches ausschließlich translatorisch bewegliche, insbesondere linear gleitende Getriebeglieder aufweist. Der Vorteil, der sich aus der Vorsehung eines solchen Kulissengetriebes ergibt, liegt darin, dass die Übertragung über ein Kulissengetriebe sehr direkt und mit einer sehr hohen Systemsteifigkeit ausgeführt werden kann. Zudem ist eine Kulissenführung und entsprechende, in den Kulissenführungen gleitende Getriebeglieder mit verhältnismäßig einfachen fertigungstechnischen Mitteln, beispielsweise Fräsen, herstellbar, wobei trotzdem hohe Fertigungspräzision gewährleistet werden kann.

In einer bevorzugten Ausführungsform der Erfindung sind die Mitnehmer in einer ersten horizontalen Ebene parallel zu einer ersten Achse bewegbar, und die Grundbacken sind in einer zu der ersten Ebene parallelen Grundbackenebene bewegbar. Der Vorteil des Ausrichtens sowohl der antreibenden Mitnehmer und der Grundbacken in horizontalen Ebenen parallel zueinander liegt darin, dass eine sehr geringe Bauhöhe im Vergleich zu ausgleichenden Spannfuttern aus dem Stand der Technik erreicht werden kann.

Vorzugsweise sind die vorstehend bezeichneten Mitnehmer erste Mitnehmer, und das Ausgleichsspannfutter weist einen Satz zweiter Mitnehmer auf, welche gleitend, vorzugsweise spielfrei in dem Gehäuse gelagert sind. Vorzugsweise ist jeweils einer der zweiten Mitnehmer mit einem der ersten Mitnehmer einerseits und mit einer der Grundbacken andererseits derart in Eingriff befindlich, dass die Bewegung der ersten Mitnehmer mittels der zweiten Mitnehmer in die Bewegung der Grundbacken überführt wird. Besonders bevorzugt sind die zweiten Mitnehmer in einer zweiten horizontalen Ebene parallel zu einer zweiten Achse bewegbar. Diese zweite Ebene ist vorzugsweise zwischen der ersten Ebene und der Grundbackenebene angeordnet. Die zweite Achse ist vorzugsweise im Wesentlichen rechtwinklig zu der ersten Achse ausgerichtet und weiter vorzugsweise um den Abstand der zweiten Ebene zur ersten Ebene von der ersten Achse versetzt.

Bei einer linearen Bewegung der ersten Mitnehmer ist in den meisten Getriebekonstellationen eine zweite Umlenkungsbewegung notwendig, um die in Richtung der ersten Mitnehmer wirkende Antriebskraft auf die radiale Beweglichkeit der Grundbacken zu übertragen. Indem dies gemäß dem vorgeschlagenen Ausführungsbeispiel durch einen zweiten Satz Mitnehmer in ebenfalls horizontaler Ebene ausgeführt wird, wird der Vorteil geringer Bauhöhe bei der erfindungsgemäßen Lösung weiter unterstrichen.

Die Grundbacken weisen in einer bevorzugten Ausführungsform jeweils eine Kulisse auf, insbesondere auf der dem Koppelabschnitt für die Spannbacken abgewandten Seite, in welcher ein korrespondierender Vorsprung eines der zweiten Mitnehmer jeweils geführt wird, vorzugsweise spielfrei.

In einer weiteren bevorzugten Ausführungsform weisen die zweiten Mitnehmer jeweils eine Kulisse auf, in welcher ein korrespondierender Vorsprung eines der ersten Mitnehmer geführt wird, insbesondere spielfrei.

Vorzugsweise sind die Kulissen auf den ersten Mitnehmern auf einer den Vorsprüngen der zweiten Mitnehmer gegenüberliegenden Seite ausgebildet.

Gemäß einer weiteren bevorzugten Ausführungsform der Erfindung weist die Antriebseinheit eine Antriebsspindel und zwei mit der Antriebsspindel mittels eines korrespondierenden Gewindes in Eingriff stehende Schlitten auf. Eine Spindel ist fertigungsökonomisch herstellbar und mit einfachen mechanischen Mitteln mechanisch oder motorisch antreibbar. Somit eignet sich das erfindungsgemäße Prinzip sowohl für Handspannbetrieb als auch für kraftunterstützten Spannbetrieb.

Die Antriebsspindel und der erste Schlitten weisen vorzugsweise im Bereich ihres Eingriffs eine erste Gewindesteigung auf, während die Antriebsspindel und der zweite Schlitten im Bereich ihres Eingriffs eine von der ersten Gewindesteigung verschiedene, vorzugsweise der ersten Gewindesteigung entgegengesetzte zweite Gewindesteigung aufweisen. Indem die Gewinde jeweils entgegengesetzt ausgerichtet sind, also beispielsweise das erste Gewinde eine Linkssteigung hat, während das zweite Gewinde eine Rechtssteigung hat, oder umgekehrt, bewegen sich beide Schlitten bei einem behinderungsfreien Spannbetrieb relativ zueinander und aufeinander zu, während der Massenschwerpunkt der Antriebseinheit insgesamt ortsfest bleibt. Solange sich der Massenschwerpunkt der Masseneinheit nicht bewegt, wird im Rahmen der Erfindung davon ausgegangen, dass die Antriebseinheit insgesamt nicht bewegt wird, wenngleich sich die einzelnen Schlitten und Mitnehmer der Antriebseinheit relativ zueinander bewegen können.

Vorzugsweise ist ein erstes Paar der ersten Mitnehmer fest an dem ersten Schlitten der Antriebseinheit angeordnet, und ein zweites Paar der ersten Mitnehmer ist fest an dem zweiten Schlitten der Antriebseinheit angeordnet.

Vorzugsweise sind die Paare der ersten Mitnehmer jeweils diametral gegenüberliedenden Grundbacken zugeordnet. Weiter vorzugsweise sind die Paare der ersten Mitnehmer bezüglich der Antriebsspindel einander kreuzweise gegenüberliegend angeordnet.

Gemäß einer weiteren bevorzugten Ausführungsform der Erfindung sind die Antriebsspindel und die Bewegungsrichtung der (ersten) Mitnehmer parallel zueinander ausgerichtet.

Gemäß einer weiteren bevorzugten Ausführungsform sind die (ersten) Mitnehmer, vorzugsweise mittels an den Mitnehmern vorgesehener Führungsmittel, in dem Gehäuse beweglich gelagert, vorzugsweise gleitend, besonders bevorzugt spielfrei. Indem die Führungsmittel für die ersten Mitnehmer zum Führen auch der Antriebseinheit genutzt werden, kann bezüglich der Antriebseinheit und insbesondere des mehrteiligen Antriebsschlittens und der Antriebsspindel auf Führungsmittel verzichtet werden. Hierdurch wird der konstruktive Aufbau der Anordnung weiter vereinfacht.

Die vorliegende Erfindung wird gemäß einem zweiten Aspekt dadurch weitergebildet, dass diejenigen Mitnehmer, welche jeweils diametral gegenüberliegenden Grundbacken zugeordnet sind, jeweils in entgegengesetzter Richtung synchron zueinander bewegbar sind. Während bei dem Ausgleichsspannfutter gemäß dem weiter oben beschriebenen ersten Aspekt jeweils ein Paar diagonal einander gegenüberliegender Mitnehmer starr zueinander angeordnet sind (was zur Folge hat, dass jeweils benachbart angeordnete und aufeinander zu bzw. voneinander weg bewegbare Mitnehmer eines Paares aufeinander zu bewegt werden, während die jeweils anderen benachbarten Mitnehmer voneinander weg bewegt werden), werden gemäß dem zweiten Aspekt bei Antrieb der Antriebseinheit beide Mitnehmerpaare aufeinander zu bewegt. Hierdurch werden auch die jeweils diametral gegenüberliegenden Mitnehmer synchron mit bewegt. Die Erfindung gemäß dem zweiten Aspekt hat aber im Wesentlichen die gleichen Vorteile wie die Erfindung gemäß dem ersten Aspekt, weswegen diesbezüglich auf die vorstehenden Ausführungen verwiesen wird.

Vorzugsweise sind gemäß dem zweiten Aspekt die einander diametral gegenüberliegenden Mitnehmer jeweils mittels eines, vorzugsweise um eine vertikale Achse schwenkbaren, Koppelglieds miteinander gekoppelt. Während bei dem Ausgleichsspannfutter gemäß dem ersten Aspekt auf das Koppelglied in Form eines schwenkbaren Elements verzichtet werden kann, ist ein solches gemäß dem zweiten Aspekt vorgesehen. Der hierdurch potentiell in Kauf zu nehmende geringe Verlust an Systemsteifigkeit wird aber dadurch kompensiert, dass eine vollständig symmetrische Bewegung der vier Mitnehmer zueinander mittels der Umlenkung erreicht wird. Hierdurch wird ein insgesamt konstruktiv einfacherer Aufbau des Getriebes der Antriebseinheit realisiert. Zudem wird die Zentrizität beim Spannen noch weiter verbessert. Vorzugsweise steht jeweils einer der Mitnehmer mit einer der Grundbacken derart in Eingriff, dass die Bewegung der Mitnehmer unmittelbar in die Bewegung der Grundbacken überführt wird. An dieser Ausführungsform wird der Vorteil der schwenkbaren Koppelung der diametral gegenüberliegenden Mitnehmer besonders deutlich; es kann auf eine zweite Mitnehmerebene verzichtet werden. Hierdurch hat das Getriebe der Antriebseinheit weniger bewegte Teile.

Vorzugsweise weisen die Grundbacken jeweils eine Kulisse auf, in welcher ein korrespondierender Vorspruch eines der Mitnehmer, vorzugsweise spielfrei, geführt wird. Insoweit ähnelt diese Ausführungsform gemäß dem zweiten Aspekt auch der Ausführungsform gemäß dem ersten Aspekt der Erfindung mit dem Unterschied, dass in die Kulisse der Grundbacken nicht die zweiten Mitnehmer, sondern unmittelbar die (ersten) Mitnehmer des Ausgleichsspannfutters eingreifen.

Gemäß einer weiteren bevorzugten Ausführungsform weist die Antriebseinheit für jeden Mitnehmer einen separaten Schlitten auf, und jeder der Mitnehmer ist fest an dem jeweiligen Schlitten angeordnet. Auch dies unterscheidet die Ausführungsform gemäß dem zweiten Aspekt der Erfindung von der Ausführungsform gemäß dem ersten Aspekt. Es sind gemäß dem zweiten Aspekt nicht mehr zwei Mitnehmer jeweils fest an einem Schlitten miteinander gekoppelt, sondern alle vier Mitnehmer sind an separaten Schlitten angeordnet. Über die Koppelung der diametral gegenüberliegenden Mitnehmer mittels der Koppelglieder werden die dritten und vierten Schlitten synchron zu den jeweils ersten und zweiten Schlitten mit bewegt. Hinsichtlich der Aufnahme und Lagerung der dritten und vierten Schlitten gilt vorzugsweise die gleiche technische Umsetzung wie für die ersten und zweiten Schlitten bei der Ausführungsform gemäß dem ersten Aspekt der Erfindung.

Gemäß einem dritten Aspekt der Erfindung wird das Ausgleichsspannfutter hinsichtlich seiner Antriebsart weitergebildet. Bezüglich einer Vielzahl gemeinsamer Aspekte mit dem ersten und zweiten Aspekt der Erfindung wird auf die hierin vorstehend beschriebenen bevorzugten Ausführungsformen verwiesen, die sich ferner auch aus den unten folgenden Figuren ergeben.

Das gemäß diesem Aspekt weitergebildete Ausgleichsspannfutter weist ebenfalls eine Antriebseinheit auf, die einen Antriebskolben aufweist, welcher zum Anschluss an eine Kraftspanneinheit einer Werkzeugmaschine ausgebildet ist. Der Antriebskolben wird auch bezeichnet als Hubkolben oder Futterkolben. Vorzugsweise ist der Antriebskolben zur Aufnahme eines Koppelelements eingerichtet, welches mit dem Zugrohr der Kraftspanneinheit der Werkzeugmaschine verbunden werden kann. Dies kann beispielsweise eine Zugschraube sein, deren Schraubenkopf im Inneren des Antriebskolbens in einer Ausnehmung aufgenommen ist, und sich derart gegen eine Schulter abstützt, dass Zugkräfte von der Kraftspanneinheit auf den Antriebskolben in Richtung einer Hubachse H übertragen werden können. Die Vielzahl verschiedener Werkzeugmaschinen, die auf dem Markt erhältlich sind, weisen teils voneinander abweichende Zugrohre beziehungsweise Zugstangen auf. Zum Anschluss des erfindungsgemäßen Ausgleichsspannfutters kann daher alternativ oder zusätzlich vorgesehen werden, mit dem Antriebskolben einen Zugrohradapter zu verbinden, welcher den Antriebskolben zum Übertragen der Spannkräfte der Kraftspanneinheit angreift, und mit dem Zugrohr beziehungsweise der Zugstange der Kraftspanneinheit zum Übertragen der Antriebskräfte verbindbar ist.

In einer bevorzugten Ausführungsform der Erfindung ist der in Richtung der Hubachse H bewegliche Antriebskolben vorzugsweise derart geführt in dem Ausgleichsspannfutter aufgenommen, dass eine Bewegung außerhalb der Richtung in Hubachse H möglichst weitgehend verhindert wird. Dies trägt zur Spielarmut beziehungsweise Spielfreiheit des Spannfutters bei. Ferner weist die Antriebseinheit vorzugsweise ein erstes und zweites Gleitstück auf, welche jeweils in einem Winkel, vorzugsweise senkrecht, zu der Hubachse H beweglich sind, vorzugsweise in korrespondierenden Ausnehmungen des Antriebskolbens geführt. Die Gleitstücke können schlittenartig ausgebildet sein und in korrespondierenden Nuten gleitend geführt aufgenommen sein.

Vorzugsweise sind die Gleitstücke derart mit den Mitnehmern gekoppelt, dass eine Bewegung des Antriebskolbens in Richtung der Hubachse H in einer Bewegung von zwei diametral gegenüberliegenden Mitnehmern (bezogen auf die Hubachse) oder einen Mitnehmer führt.

in einer vorteilhaften Weiterbildung weisen die Gleitstücke jeweils Vorsprünge auf, die kulissenartig derart mit den Mitnehmern gekoppelt sind, dass eine Bewegung des jeweiligen Gleitstücks in Richtung der Hubachse H eine Relativbewegung der mit dem Gleitstück gekoppelten Mitnehmer senkrecht zu der Hubachse H bewirkt. Diese Art der Kulissenführung, die bereits vom Zwischenspiel mehrerer Mitnehmer miteinander (beim ersten Aspekt) oder der Mitnehmer mit den Grundbacken (erster und zweiter Aspekt) vertraut ist, trägt auch bei dem Ausgleichsspannfutter gemäß dem dritten Aspekt der Erfindung zum spielfreien Bewegen der Mitnehmer bei.

Gemäß einer weiteren bevorzugten Ausführungsform sind die Gleitstücke bezogen auf die Hubachse H einander (diametral) gegenüberliegend angeordnet, mittels eines oder mehrerer Koppelglieder verbunden und in entgegengesetzter Richtung synchron zueinander bewegbar. Die Koppelung und gegenläufig synchrone Beweglichkeit der Gleitstücke hat im Wesentlichen folgenden Effekt: Beim Bewegen des Antriebskolbens in Richtung der Hubachse H werden zunächst infolge der kulissenartigen Führung und der in dieser eingreifenden Vorsprünge der Gleitstücke die Mitnehmer synchron aufeinander zu oder voneinander wegbewegt. Werden zwei diametral gegenüberliegende Mitnehmer blockiert, beispielsweise durch Anliegen an einem einzuspannenden Werkstück, bewegen sich bei fortgesetzter Antriebsbewegung des Antriebskolbens in Richtung der Hubachse H die Gleitstücke aufgrund ihrer Führung seitlich relativ zum Antriebskolben. Aufgrund ihrer Koppelung miteinander resultiert eine Bewegung des ersten Gleitstücks in eine Richtung in einer synchronen Bewegung des zweiten Gleitstücks in die entgegengesetzte Richtung, vorzugsweise mit gleicher Geschwindigkeit. Dies führt wiederum dazu, dass die beiden nicht blockierten, diametral einander gegenüberliegenden Mitnehmer trotz Blockierens des anderen Paars Mitnehmer weiterbewegt werden, und ein vollständiges Spannen und zentrisches Fassen des Werkstücks bewirkt wird. Die betragsmäßige Höhe des maximalen Ausgleichswegs beziehungsweise der maximalen Wegdifferenz zwischen den Mitnehmern und somit auch zwischen den Grundbacken des Ausgleichsspannfutters hängt beim Ausgleichsspannfutter gemäß diesem Aspekt maßgeblich von der Länge des Ausgleichswegs beziehungsweise dem Ausmaß der relativen Beweglichkeit der Gleitstücke zueinander ab. Diese wird wiederum insbesondere durch die Art und Länge der die Gleitstücke verbindenden Koppelglieder bestimmt.

Die Erfindung wird im Folgenden anhand bevorzugter Ausführungsbeispiele und unter Bezugnahme auf die beigefügten Figuren näher beschrieben. Hierbei zeigen
- Figur 1: eine Gesamtansicht eines Ausgleichsspannfutters gemäß dem bevorzugten Ausführungsbeispiel der Erfindung,
- Figur 2: eine räumliche Ansicht des Ausgleichsspannfutters gemäß Figur 1 in einem teilmontierten Zustand,
- Figur 3: eine räumliche Ansicht des Ausgleichsspannfutters gemäß den Figuren 1 und 2 in einem weiteren teilmontierten Zustand,
- Figur 4: eine räumliche Ansicht des Ausgleichsspannfutters gemäß den Figuren 1 bis 3 in einem weiteren teilmontierten Zustand,
- Figur 5: eine Explosionsdarstellung der Antriebseinheit gemäß Figur 4,
- Figur 6: eine Explosionsdarstellung von Teilen des Ausgleichsspannfutters gemäß den Figuren 1 bis 3 und der Antriebseinheit gemäß den Figuren 4 bis 5,
- Figur 7: eine weitere räumliche Darstellung eines Teils des Ausgleichsspannfutters gemäß den vorstehenden Figuren,
- Figur 8: eine weitere räumliche Darstellung des teilmontierten Ausgleichsspannfutters gemäß der vorstehenden Figuren,
- Figur 9: eine weitere räumliche Darstellung eines teilmontierten Zustands des Ausgleichsspannfutters gemäß der vorstehenden Figuren,
- Figuren 10a-d: verschiedene Ansichten des Ausgleichsspannfutters gemäß den vorstehenden Figuren in einem ersten Betriebszustand,
- Figuren 11 a-d: verschiedene Ansichten des Ausgleichsspannfutters gemäß den vorstehenden Figuren in einem zweiten Betriebszustand,
- Figuren 12a-d: verschiedene Darstellungen des Ausgleichsspannfutters gemäß den vorstehenden Figuren in einem dritten Betriebszustand,
- Figuren 13a-d: verschiedene Darstellungen des Ausgleichsspannfutters gemäß den vorstehenden Figuren in einem vierten Betriebszustand,
- Figuren 14a-d: verschiedene Darstellungen des Ausgleichsspannfutters gemäß den vorstehenden Figuren in einem fünften Betriebszustand,
- Figur 15: eine räumliche Darstellung eines teilmontierten Ausgleichsspannfutters gemäß einem zweiten Ausführungsbeispiel gemäß der vorliegenden Erfindung,
- Figur 16: eine weitere räumliche Darstellung eines Teils des Ausgleichsspannfutters gemäß Figur 15,
- Figur 17: eine weitere räumliche Darstellung eines Teils des Ausgleichsspannfutters gemäß den Figuren 15 und 16,
- Figuren 18a,b: verschiedene Ansichten des Ausgleichsspannfutters gemäß den Figuren 15 bis 17 in einem erste Betriebszustand,
- Figuren 19a,b: verschiedene Ansichten des Ausgleichsspannfutters gemäß den Figuren 15 bis 18 in einem zweiten Betriebszustand,
- Figuren 20a,b: verschiedene Darstellungen des Ausgleichsspannfutters gemäß den Figuren 15 bis 19 in einem dritten Betriebszustand, und
- Figur 21: eine Darstellung des Ausgleichsspannfutters gemäß den Figuren 15 bis 20 in einem vierten Betriebszustand,
- Figur 22: eine räumliche Darstellung eines teilmontierten Ausgleichsspannfutters gemäß einem dritten Ausführungsbeispiel gemäß der vorliegenden Erfindung,
- Figur 23a, b:: eine weitere räumliche Darstellung eines Teils des Ausgleichsspannfutters gemäß Figur 22,
- Figur 24a, b:: eine den Figuren 23a, b entsprechende Darstellung des Ausgleichsspannfutters gemäß Figur 21 in einem anderen Betriebszustand,
- Figur 25:: eine Draufsicht auf ein Teil des Ausgleichsspannfutters gemäß den Figuren 22 bis 24 in einem ersten Betriebszustand,
- Figur 26: eine Draufsicht auf das Spannfutter gemäß Figur 25 in einem zweiten Betriebszustand,
- Figur 27: eine Draufsicht auf das Ausgleichsspannfutters gemäß den Figuren 21 bis 26 in einem dritten Betriebszustand,
- Figur 28: eine Draufsicht auf das Ausgleichsspannfutter gemäß den Figuren 21 bis 27 in einem vierten Betriebszustand, und
- Figur 29: eine weitere räumliche Darstellung eines Teils des Ausgleichsspannfutters gemäß den Figuren 21 bis 28 in dem vierten Betriebszustand.

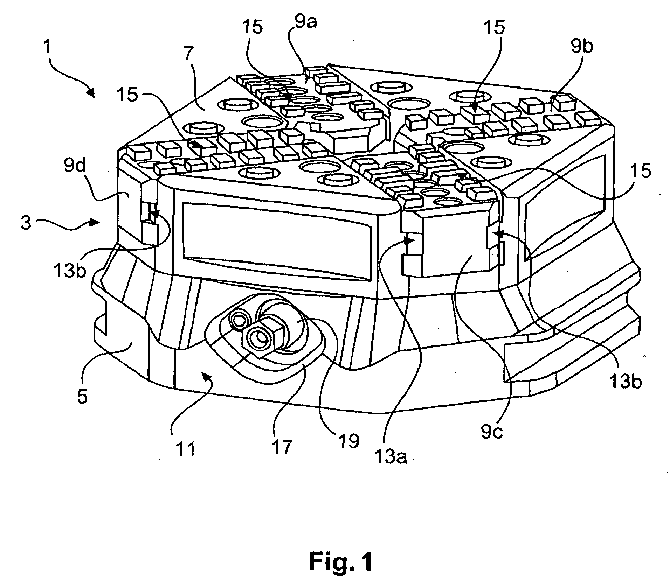

Figur 1 zeigt ein Ausgleichsspannfutter 1 gemäß einem ersten bevorzugten Ausführungsbeispiel der Erfindung. Das Ausgleichsspannfutter 1 weist ein Gehäuse 3 auf. Das Gehäuse 3 ist in einen unteren Gehäuseteil 5 und einen oberen Gehäuseteil 7 unterteilt. Der untere Gehäuseteil 5 ist funktional zur Aufnahme einer Antriebseinheit 11 eingerichtet. Der obere Gehäuseteil 7 ist funktional zur Aufnahme mehrerer Grundbacken 9 eingerichtet. In dem in Figur 1 gezeigten vollständigen Montagezustand sind insgesamt vier Grundbacken 9, in Paaren einander gegenüberliegend, zentrisch aufeinander ausgerichtet und in entsprechende Ausnehmungen des Gehäuseteils 7 eingesetzt. Die Grundbacken 9 sind linear gleitend, vorzugsweise spielfrei, in dem oberen Gehäuseteil 7 des Gehäuses 3 geführt. Zur Führung dienen jeweils parallel ausgebildete Führungsschienen und entsprechende korrespondierende Vorsprünge 13a,b. Die Grundbacken weisen auf ihrer in Figur 1 noch oben gerichteten Außenfläche jeweils Kopplungsmittel 15 zur Verbindung mit korrespondierend ausgebildeten Spannbacken auf.

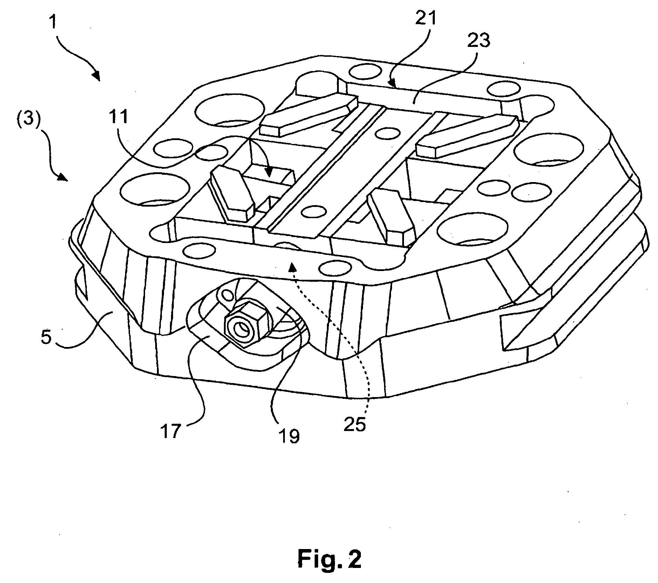

Der untere Gehäuseteil 5 des Gehäuses 3 beherbergt die Antriebseinheit 11. Eine seitliche Ausnehmung 17 in dem Gehäuse 3 ist dazu eingerichtet, den Zugang auf eine Antriebsspindel 19 freizugeben, welche sich durch die Ausnehmung 17 hindurch nach außen erstreckt. Der Montagezustand des in Figur 1 gezeigten Ausgleichsspannfutters unterscheidet sich von dem in Figur 2 gezeigten Zustand dadurch, dass bei der Darstellung gemäß Figur 2 lediglich der untere Teil 5 des Gehäuses 3 mitsamt der Antriebseinheit 11 dargestellt ist.

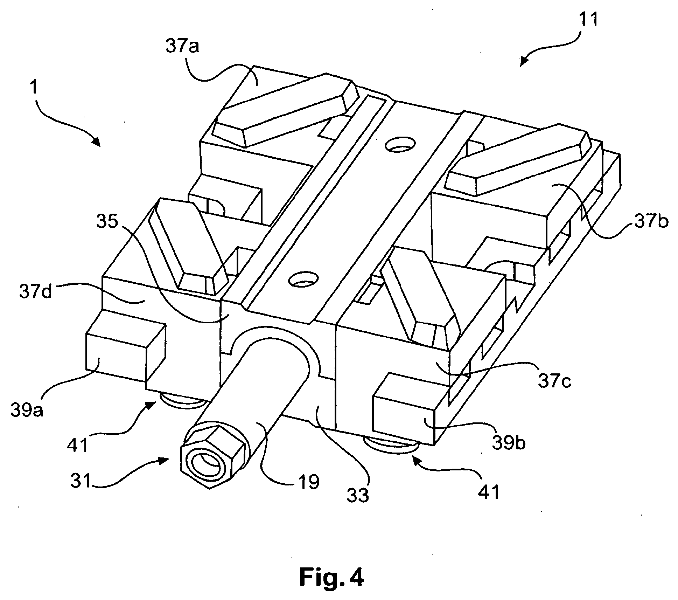

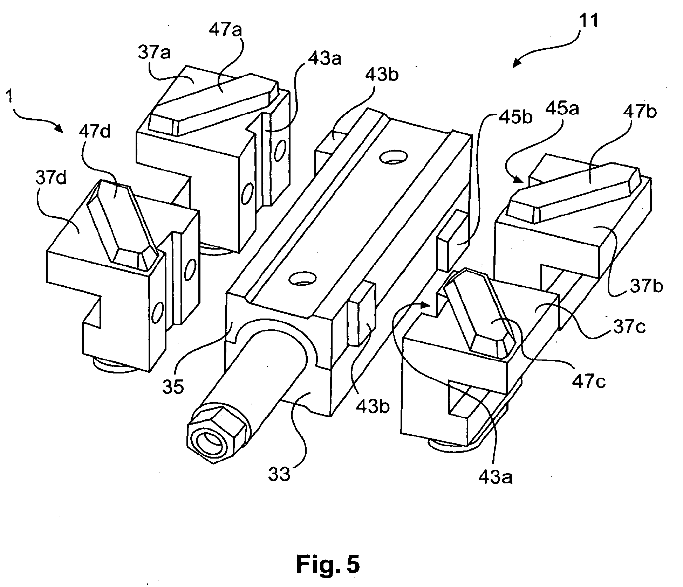

Das Gehäuse 3 weist in seinem Inneren eine Aufnahme 21 auf, in welcher die Antriebseinheit 11 gleitend, insbesondere spielfrei, gelagert ist. Die Antriebseinheit 11 ist zwischen einer ersten Anschlagfläche 23, vorzugsweise distal bezüglich der Ausnehmung 17, und einer zweiten Anschlagfläche 25, vorzugsweise proximal zu der Ausnehmung 17, hin und her bewegbar. Auf Details bezüglich der Antriebseinheit wird nachfolgend in den Figuren 4 und 5 näher eingegangen.

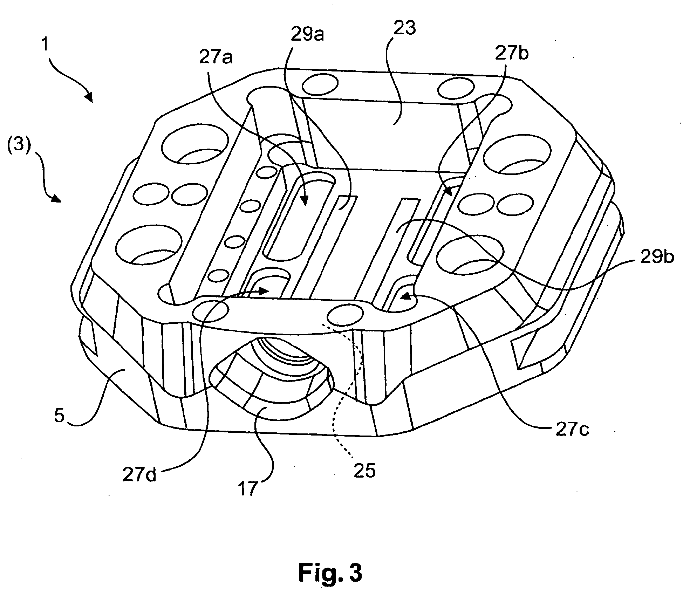

In der Teildarstellung gemäß Figur 3 ist die Antriebseinheit 11, die in Figur 2 noch innerhalb des unteren Teils 5 des Gehäuses 3 dargestellt ist, entfernt. Der Blick ist somit freigegeben auf eine Mehrzahl von Ausnehmungen 27a-d zur Führung der Antriebseinheit 11 in Richtung ihrer Verschiebbarkeit zwischen den Anschlagflächen 23, 25. Zwischen den einander gegenüberliegenden Ausnehmungen 27a,d; 27b,c sind zwei Gleitschienen 29a,b vorgesehen. Die Gleitschienen 29a,b sind dazu eingerichtet, einen möglichst geringen Reibwert zwischen der Antriebseinheit 11 und dem Gehäuse 3 bereitzustellen, damit eine möglichst kraftarme Verschlebbewegung realisiert werden kann.

In Figur 4 ist die Antriebseinheit 11 im Detail dargestellt. Die Antriebseinheit 11 weist an dem in montiertem Zustand durch die Ausnehmung 17 des Gehäuses 3 hindurch erstreckten Ende der Antriebsspindel 19 einen Kopfabschnitt 31 auf. Der Kopfabschnitt 31 ist zum Ineingriffbrlngen mit einem Werkzeugschlüssel ausgebildet.

Die Antriebsspindel 19 ist in einem ersten Bereich mittels eines ersten Gewindeabschnitts mit einem ersten Schlitten 33 kraftübertragend verbunden, und in einem zweiten Bereich mit einem zweiten Gewindeabschnitt kraftübertragend mit einem zweiten Schlitten 35 verbunden. Durch rotatorischen Antrieb der Antriebsspindel 19 über den Kopfabschnitt 31 werden der erste Schlitten 33 und der zweite Schlitten 35 aufgrund entgegengesetzter Gewindesteigungen relativ zueinander bewegt.

Die Antriebseinheit 11 weist insgesamt vier erste Mitnehmer 37a-d auf. Durch eine Relativbewegung des ersten Schlittens 33 zu dem zweiten Schlitten 35 werden die Mitnehmer 37a,c relativ zu den Mitnehmern 37b,d bewegt. Folglich ist ein erstes Paar der ersten Mitnehmer 37a,c zueinander starr und fest mit dem zweiten Antriebsschlitten 35 verbunden, während ein zweites Paar der ersten Mitnehmer 37b,d zueinander starr und fest mit dem ersten Schlitten 33 der Antriebseinheit 11 verbunden ist.

in Figur 4 sind ferner zwei Stützschienen 39a,b abgebildet, welche die Mitnehmer zusätzlich im Inneren des Gehäuses 3 abstützen und in ihrer Bewegung führen. Die Mitnehmer 37a-d weisen jeweils auf der in Figur 4 unteren Seite (teilweise verdeckt) Vorsprünge 41 auf, welche zu den Führungen 27a-d korrespondierend ausgebildet sind und spielfrei in diesen gleiten können. Weitere Details zu der Antriebseinheit ergeben sich aus Figur 5.

In Figur 5 ist die Kopplung der Mitnehmer 37a-d an die Schlitten 33, 35 der Antriebseinheit 11 dargestellt. Die Mitnehmer 37a,c sind mittels korrespondierend ausgebildeter Nuten 43a und Vorsprünge 43b mit dem zweiten Schlitten 35 koppelbar. In analoger Welse sind die Mitnehmer 37b,d mittels korrespondierender Nuten 45a und Vorsprünge 45b mit dem ersten Schlitten 33 der Antriebseinheit 11 koppelbar. Die Mitnehmer 37a-d weisen an ihrer in Figur 5 oberen Seitenfläche jeweils einen Vorsprung 47a-d auf. Die benachbarten Vorsprünge 47a,b der relativ zueinander beweglichen Mitnehmer 37a,b sind parallel zueinander ausgerichtet. Die Vorsprünge 47c,d der benachbarten, relativ zueinander beweglichen Mitnehmer 37c,d sind ebenfalls parallel zueinander ausgerichtet.

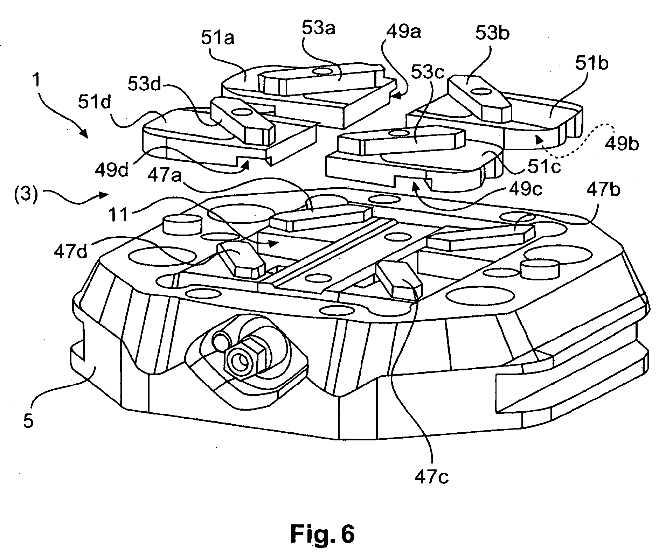

Die in den Figuren 4 und 5 näher beschriebene Antriebseinheit 11 ist, wie auch bereits in Figur 2 veranschaulicht, in der Darstellung gemäß Figur 6 in das Gehäuse 3 eingesetzt. Oberhalb des unteren Teils 5 des Gehäuses 3 des Ausgleichsspannfutters 1 sind insgesamt vier zweite Mitnehmer 51 a-d abgebildet. Die zweiten Mitnehmer 51a-d weisen an ihrer Unterseite jeweils eine Ausnehmung 49a-d auf. Die Ausnehmungen 49a-d dienen als Kulissenführung und sind zur, vorzugsweise spielfreien, Aufnahme der korrespondierenden Vorsprünge 47a-d der ersten Mitnehmer 37a-d (Figur 5) eingerichtet. Die zweiten Mitnehmer 51a-d weisen jeweils an ihrer den Ausnehmungen 49a-d gegenüberliegenden Seite einen Vorsprung 53a-d auf.

Während die ersten Mitnehmer 37a-d (Figuren 4, 5) innerhalb der Ausnehmung 21 (Figur 2) des Gehäuses 3 in einer ersten Richtung, vorzugsweise parallel zu einer ersten Bewegungsachse, bewegbar sind, sind die zweiten Mitnehmer 51a-d in einer von der ersten Achse verschiedenen zweiten Richtung, vorzugsweise orthogonal zu der Richtung der ersten Achse, bewegbar. Dies wird erreicht, indem die zweiten Mitnehmer 51a-d in korrespondierende Führungen eingesetzt werden, die als Ausnehmungen 55a,b in die Unterseite des oberen Teils 7 des Gehäuses 3 eingelassen sind. Die zweiten Mitnehmer 51a,b sind beispielsweise geführt in der Ausnehmung 55b beweglich, während die zweiten Mitnehmer 51c,d der Ausnehmung 55a geführt beweglich sind, jeweils vorzugsweise spielfrei.

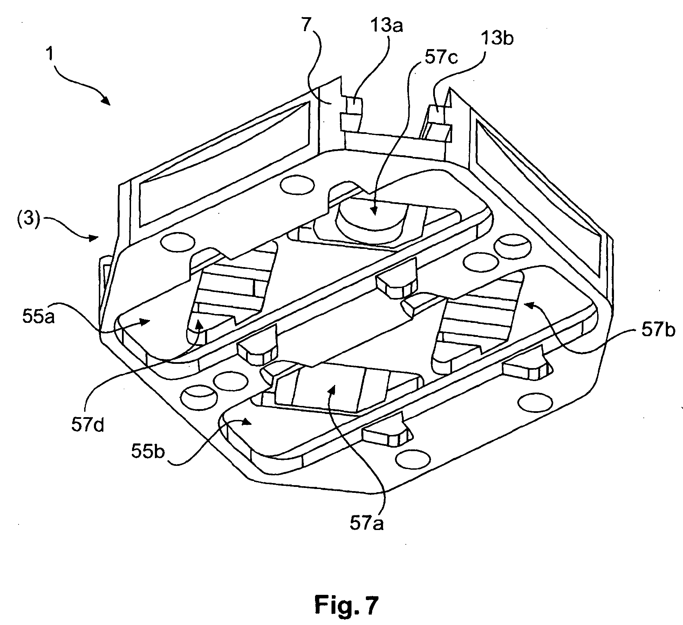

Wie sich aus Figur 7 weiterhin ergibt, sind von den Ausnehmungen 55a,b aus Durchbrüche in das Gehäuse 3 eingelassen, welche sich bis in die Ausnehmungen zur Aufnahme der Grundbacken 9a-d erstrecken. Die Durchbrüche sind mit den Bezugszeichen 57a-d gekennzeichnet.

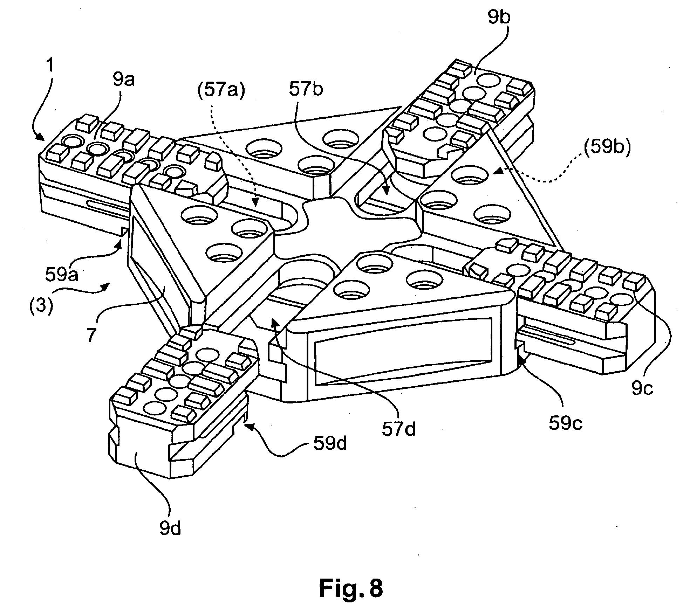

Der obere Teil 7 des Gehäuses 3 ist in Figur 7 schräg von unten abgebildet, während er in Figur 8 schräg von oben abgebildet ist, bezogen auf die Orientierung des Ausgleichsspannfutters beispielsweise in Figur 1. Die Grundbacken 9a-d sind gemäß Figur 8 teilweise in die dafür vorgesehenen Führungs-Ausnehmungen des Gehäuses 3 eingeführt. Teilweise ist in Figur 8 zu erkennen, dass die Grundbacken 9a-d auf ihrer in montiertem Zustand in Richtung der Durchbrüche 57a-d weisenden Seiten jeweils eine Ausnehmung 59a-d aufweisen. Die Ausnehmungen 59a-d dienen als Aufnahme, vorzugsweise als Kulissenführung, für die Vorsprünge 53a-d (Figur 6) der zweiten Mitnehmer 51a-d. Eine Bewegung der zweiten Mitnehmer 51a-d in der durch die Ausnehmungen 55a,b vorgegebenen zweiten Bewegungsrichtung wird durch Kopplung mit den Grundbacken 9a-d in eine Bewegung in Richtung der korrespondierenden, die Grundbacken 9a-d aufnehmenden Ausnehmungen umgesetzt.

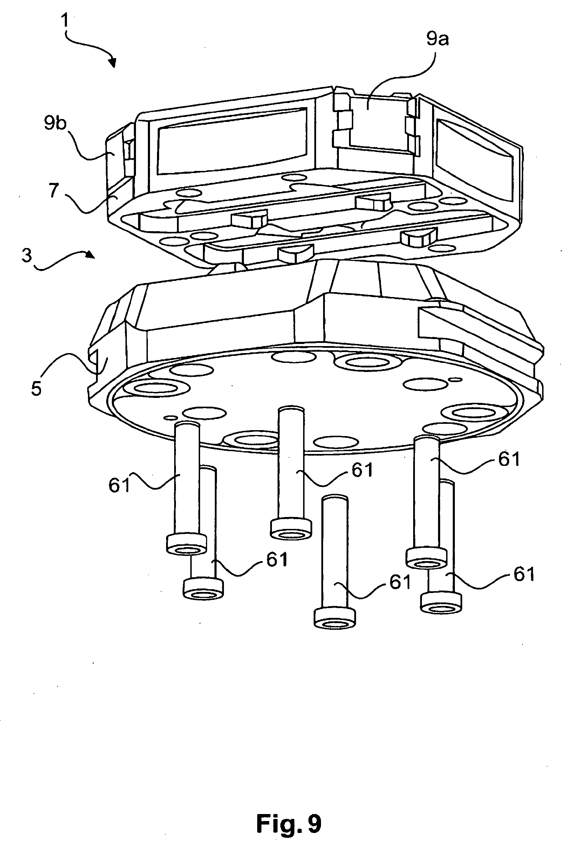

Durch Zusammensetzen des unteren Teils 5 und oberen Teils 7 des Gehäuses 3, dargestellt in Figur 9, wird der vollständig montierte Zustand gemäß Figur 1 hergestellt. Die Befestigung kann, wie beispielsweise in Figur 9 gezeigt, mittels einer oder mehrerer Schraubverbindungen 61 erfolgen.

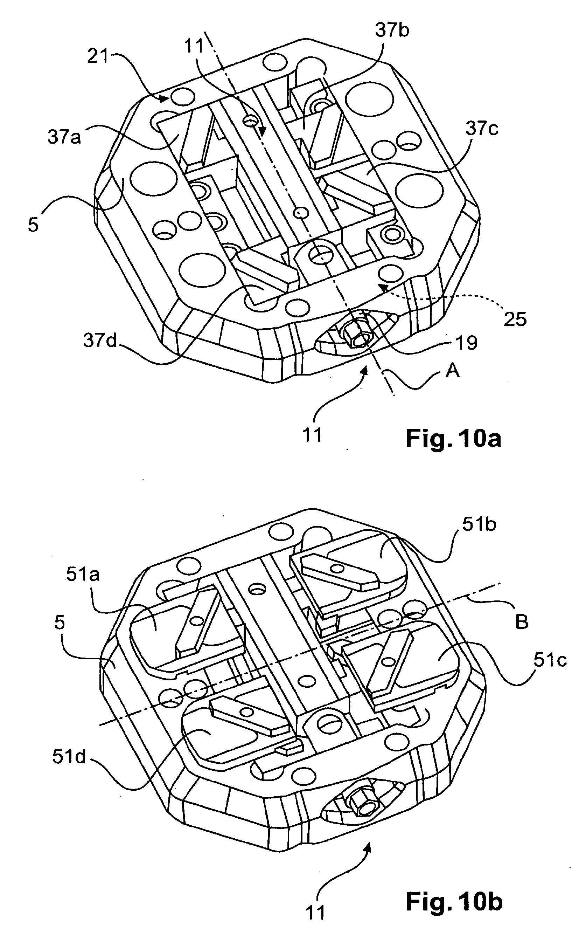

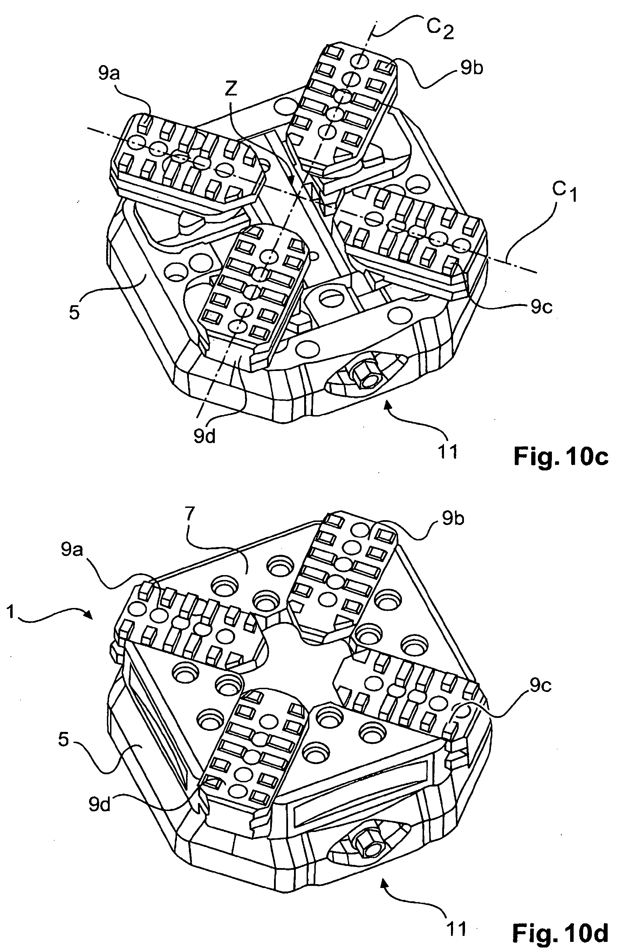

Während die Figuren 1 bis 9 den konstruktiven Aufbau des erfindungsgemäßen Ausgleichsspannfutters 1 zeigen, wird in den nachfolgenden Figuren 10 bis 14 insbesondere das funktionale Zusammenspiel der einzelnen Komponenten veranschaulicht.

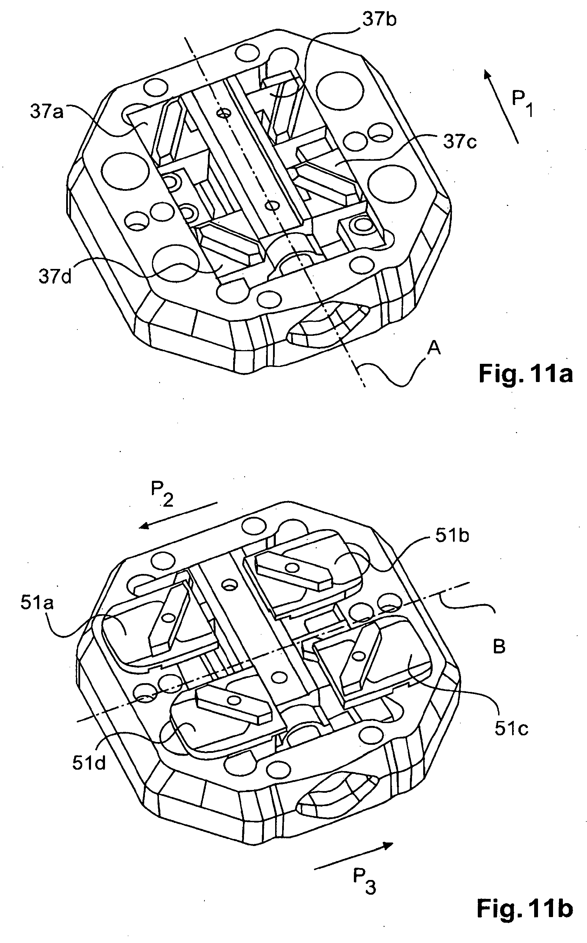

Während in den Figuren 10a-d die Bezugszeichen einiger struktureller Teile des Spannfutters aus den Figuren 1 bis 10, auf die diesbezüglich verwiesen wird, erneut aufgeführt sind, werden aus Gründen der Übersichtlichkeit in den Figuren 11a-d, 12a-d, 13a-d und 14a-d jeweils nur die Teile mit Bezugszeichen versehen, welche Teil des Getriebes des Ausgleichsspannfutters 1 sind bzw. mit diesem zusammenwirken.

In den Figuren 10a-d ist das Ausgleichsspannfutter 1 in einer ersten Betriebsstellung gezeigt. Die erste Betriebsstellung entspricht einer Stellung mit maximal weit geöffneten, d.h. auseinanderbewegten, Grundbacken 9a-d. Wie sich aus Figur 10a ergibt, ist die Antriebseinheit 11 durch Antrieb der Antriebsspindel 19 derart bewegt worden, dass das erste Paar erster Mitnehmer 37a,c und das zweite Paar erster Mitnehmer 37b,d jeweils in einer ersten Endstellung verweilt. Der erste Mitnehmer 37a befindet sich in Anlage mit der Anschlagfläche 21, während sich der erste Mitnehmer 37d in Anlage mit der gegenüberliegenden Anschlagfläche 25 befindet.

Die zweiten Mitnehmer 51a-d, welche mit den ersten Mitnehmern 37a-d mittels ihrer Kulissenführungen in Eingriff stehen, sind in diesem Zustand in eine linke (zweiter Mitnehmer 51a,d) bzw. rechte (zweiter Mitnehmer 51b,c) Endstellung verbracht (Figur 10b).

Die ersten Mitnehmer sind durch Verfahren parallel zu der Richtung der Achse A in ihre jeweilige Stellung verbracht worden, während die zweiten Mitnehmer 51a-d durch entsprechendes Verfahren parallel zu der Richtung der Achse B in die abgebildete Stellung bewegt worden sind.

Die in Figur 10c gezeigten Grundbacken 9a-d, die auf einen gemeinsamen Mittelpunkt Z ausgerichtet sind, sind durch Bewegung in Richtung der Achsen C1 und C2 in die abgebildete Endstellung gebracht worden, in der sie vorzugsweise alle den gleichen Abstand zum Mittelpunkt Z aufweisen. Hierdurch ergibt sich der in Figur 10 gezeigte Zustand des Ausgleichsspannfutters 1.

Wird die Antriebseinheit 11 ausgehend von Figur 10a-d aktiviert, könnten sich nun grundsätzlich alle vier ersten Mitnehmer 37a-d bewegen, sofern sie nicht an ihrer Bewegung gehindert sind. Die ersten Mitnehmer 37a,c würden sich hierbei in Richtung der Achse A nach unten bewegen, während sich die ersten Mitnehmer 37b,d in Richtung der Achse A nach oben bewegen würden. Werden die Mitnehmer 37a,c hingegen an ihrer Bewegung gehindert, verweilen sie bei Betätigung der Antriebsspinde/19 an ihrer Stelle, und nur die Mitnehmer 37b,d werden bewegt. Dieser Zustand ist in Figur 11a-d abgebildet. Die Mitnehmer 37b,d sind in Richtung des Pfeils P1 entlang der Achse A nach oben bewegt worden. Infolge der Relativbewegung nur eines der Mitnehmerpaare ist die Antriebseinheit 11 entsprechend in Richtung des Pfeils P1 im Vergleich zu dem Zustand gemäß Figur 10 bewegt worden, indem sich ihr Massenschwerpunkt verschoben hat.

Aufgrund der Koppelung der ersten Mitnehmer mit den zweiten Mitnehmern 51a-d sind die zweiten Mitnehmer 51a,c gemäß Figur 11b unverändert an der gleichen Stelle wie in Figur 10b. Allerdings sind die zweiten Mitnehmer 51 b,d in Richtung des Pfeils P2 bzw. P3 entlang der Achse B nach links bzw. rechts bewegt worden. Die Anstellwinkel der Vorsprünge auf den ersten Mitnehmern 37a-d und den damit korrespondierenden Vorsprüngen der zweiten Mitnehmer 51a-d sind vorzugsweise so gewählt, dass sich die zweiten Mitnehmer 51b,d und die zweiten Mitnehmer 51 a,c jeweils genau gleich weit bewegen, wenn die ersten Mitnehmer 37b,d bzw. 37a,c bewegt werden.

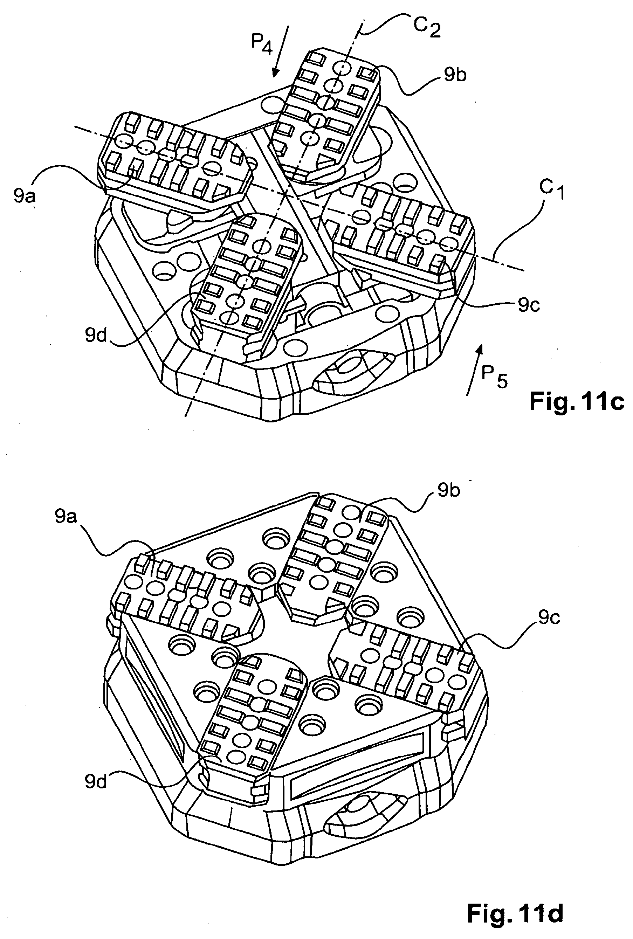

Wie aus den Figuren 11c und d zu erkennen ist, sind die mit den zweiten Mitnehmern 51 b,d gekoppelten Grundbacken 9b,d jeweils gleich weit in Richtung des Spannfuttermittelpunkts Z bewegt worden. Die Relativbewegung zwischen den benachbarten Grundbacken 9a,b bzw. 9b,c bzw. 9c,d bzw. 9d,a ist folglich ermöglicht worden, indem die Antriebseinheit 11 innerhalb der Ausnehmung 21 beweglich gelagert ist und im Zustand gemäß Figur 10 bis zum Zustand gemäß Figur 11 bewegt werden konnte.

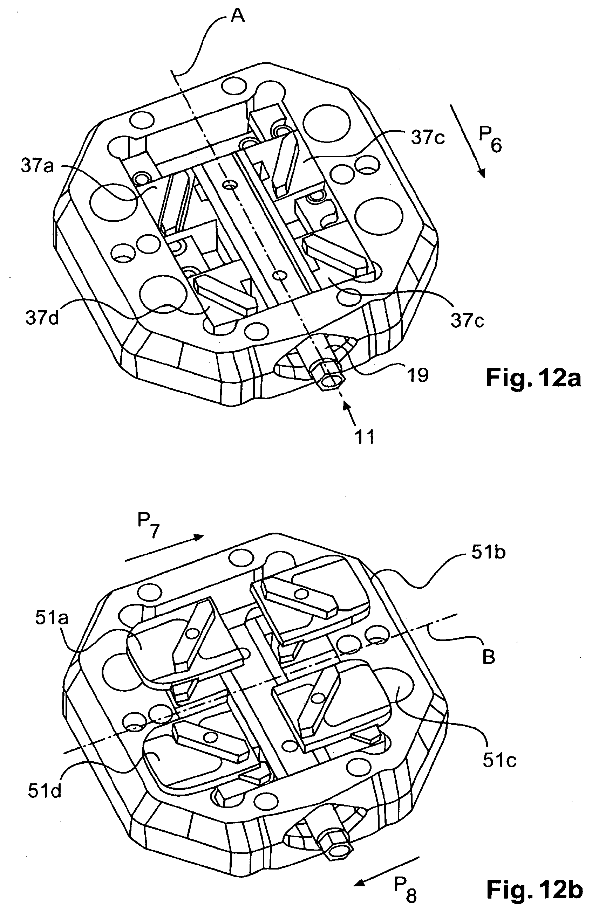

Alternativ zu der Bewegung in den Zustand gemäß Figur 11 ist ausgehend von der Grundstellung gemäß Figur 10 auch eine Verbringung in den Zustand gemäß den Figuren 12a-d möglich. In Figur 12a ist gezeigt, dass die Position der ersten Mitnehmer 37b,d im Vergleich zu Figur 10a unverändert geblieben ist, während allerdings die ersten Mitnehmer 37a,c von ihrer Endposition gemäß Figur 10a in die gegenüberliegende Endposition gemäß Figur 12a gebracht worden sind, so dass der erste Mitnehmer 37c an der Anschlagfläche 25 ebenso wie der erste Mitnehmer 37d anliegt. Die Mitnehmer 37a,c sind mit dem sie verbindenden Schlitten folglich in Richtung des Pfeils P6 entlang der Achse A bewegt worden.

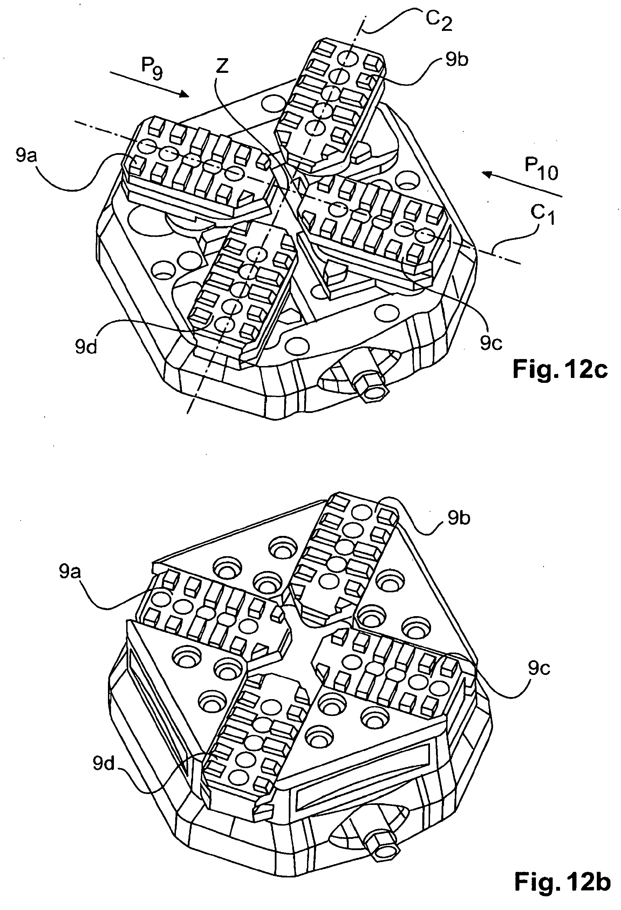

Figur 12b zeigt folgerichtig, dass die zweiten Mitnehmer 51b,d unverändert in derjenigen Position sind, wie sie bereits in Figur 10b zu sehen ist, nämlich ganz links (zweiter Mitnehmer 51d) bzw. ganz rechts (zweiter Mitnehmer 51b). Aufgrund der Relativbewegung der ersten Mitnehmer 37a,c sind aber der zweite Mitnehmer 51a in Richtung des Pfeils P7 und der zweite Mitnehmer 51c in Richtung des Pfeils P8 nach rechts bzw. links verschoben worden. Aufgrund der Begrenzung durch die Anschlagflächen der Ausnehmung 21 befinden sich gemäß den Figuren 12c,d nun die Grundbacken 9a,c in ihrer den Mittelpunkt Z nächstmöglichen Stellung, während die Grundbacken 9a,c in Richtung der Pfeils P9 und P10 jeweils entlang der Achse C1 nach innen verfahren worden sind. Hieraus wird ersichtlich, dass die maximal ungleiche Einstellung der Grundbackenpaare 9a,c bzw. 9b,d zueinander bestimmt wird durch die Zustände in denen die benachbarten ersten Mitnehmer 37a,b bzw. 37c,d gemeinsam an einer der die Ausnehmung 21 begrenzenden Anschlagflächen 23, 25 anliegen.

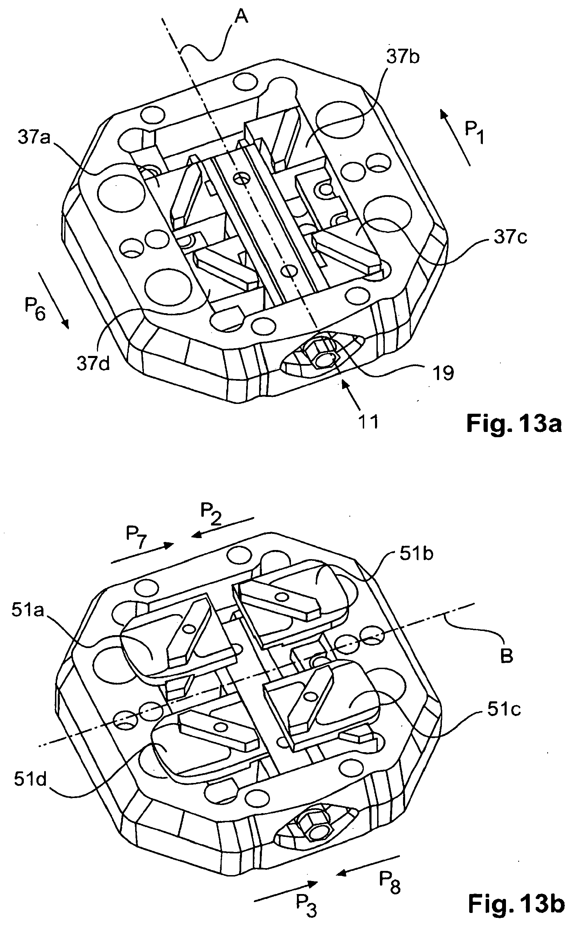

Die Figuren 13a-d zeigen einen Betriebszustand, der sich abstrakt betrachtet aus den beiden Zuständen gemäß den Figuren 11 und 12 zusammensetzt, und welchen man beispielsweise erhält, wenn man ausgehend von dem in Figur 12a-d erreichten Zustand den Antrieb der Antriebseinheit 11 fortsetzt. Zusätzlich zum Verfahren der Mitnehmer 37a,c wird durch weiteres Bewegen und weiteres Ausweichen bzw. Gleiten der Antriebseinheit 11 in der Ausnehmung 21 eine Relativbewegung der Mitnehmer 37b,d zu den Mitnehmern 37a,c erreicht, so dass das eine Paar von Mitnehmern 37a,c in Richtung des Pfeils P6 verfahren ist, während das andere Paar von Mitnehmern 37b,d in Richtung des Pfeils P1 verfahren wird. Dies zeigt sich auch in dem in Figur 13b gezeigten Zustand der zweiten Mitnehmer 51a-d. Die zweiten Mitnehmer 51a,c sind in Richtung der Pfeils P7, P8 verfahren, während die zweiten Mitnehmer 51 b,d in Richtung der Achse B bewegt worden sind.

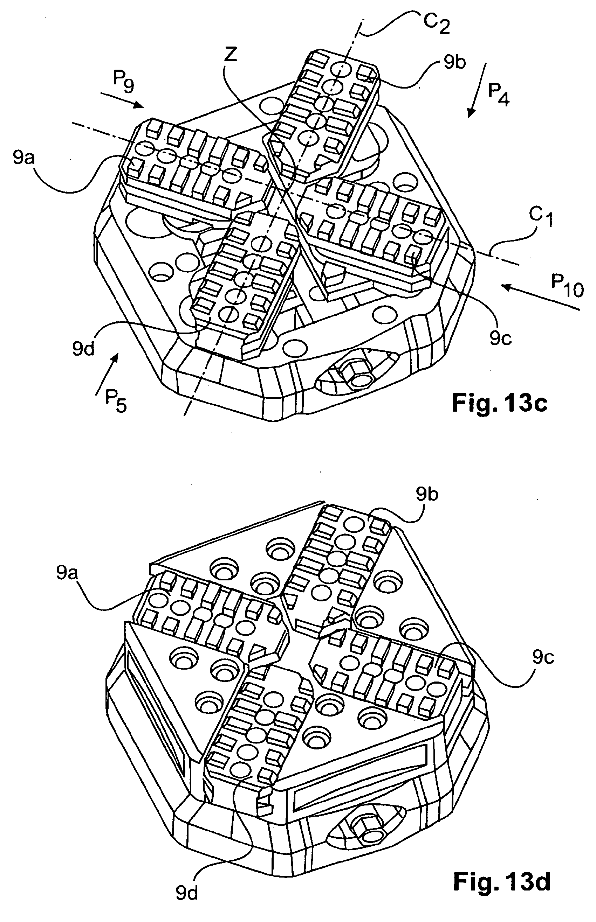

Figuren 13c und 13d geben folglich den Zustand der Grundbacken 9a-d wieder, in welchen die Grundbacken 9a,c in Richtung der Pfeile P9, P10 auf den gemeinsamen Mittelpunkt Z hin bewegt worden sind, und die Grundbacken 9b,d in Richtung der Pfeile P4, P5 in Richtung auf den Mittelpunkt Z hin zubewegt worden sind.

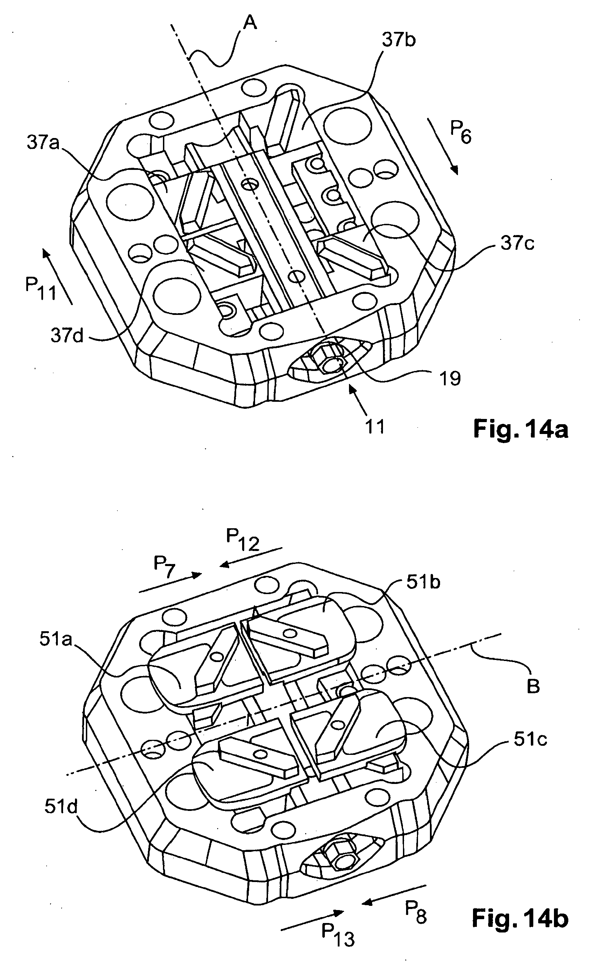

Die Figuren 14a-d zeigen schließlich den zum Zustand gemäß Figuren 10a-d entgegengesetzten Endzustand des Ausgleichsspannfutters 1. In dem Zustand gemäß Figuren 14a-d sind die ersten Mitnehmer 37a,c in Richtung des Pfeils P6 in eine zweite Endstellung, die der maximalen Spannstellung entspricht, bewegt worden. Die ersten Mitnehmer 37b,d sind in Richtung eines Pfeils P11 in Richtung der Achse A in ihre zweite Endstellung und somit soweit bewegt worden, bis der erste Mitnehmer 37b in Anlage mit der Anschlagfläche 23 verbracht worden ist. Demzufolge ist sowohl das Paar zweiter Mitnehmer 51b,d als auch das Paar zweiter Mitnehmer 51a,c jeweils maximal weit in Richtung der Achse B aufeinander zu bewegt worden. Es entspricht einer Bewegung der zweiten Mitnehmer 51a,c um die Pfeile P7, P8, und der zweiten Mitnehmer 51b,d in Richtung der Pfeile P12, P13.

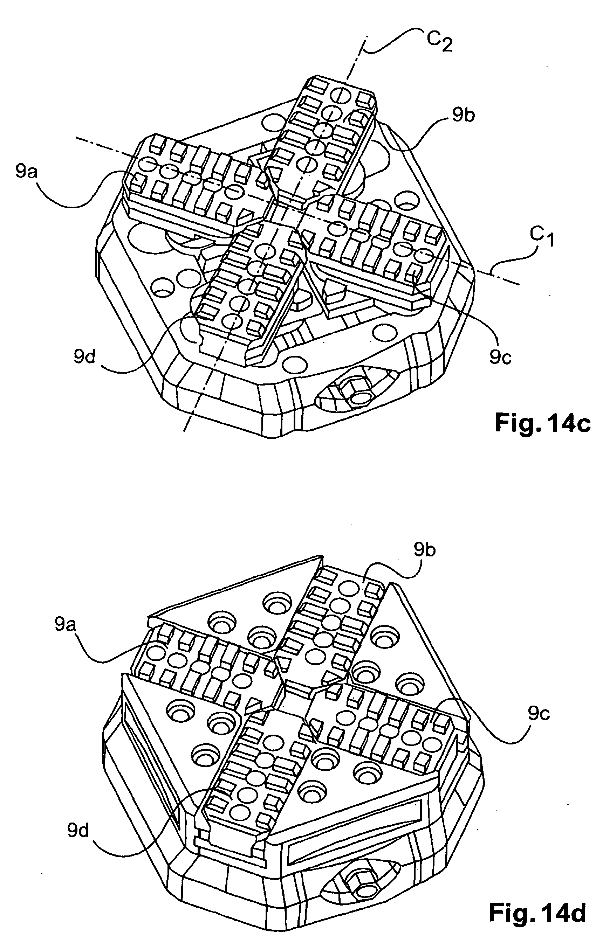

Wie sich aus den Figuren 14c,d ergibt, befindet sich in dem Zustand gemäß den Figuren 14 sowohl das Paar der Grundbacken 19a,c als auch das Paar der Grundbacken 9b,d in seiner maximalen Spannstellung, nächstmöglich bezüglich des Mittelpunkts Z des Ausgleichspannfutters 1 angeordnet.

Wie sich aus den vorstehenden Schilderungen ergibt, gewährleistet das Getriebe umfassend die ersten Mitnehmer 37a-d, zweiten Mitnehmer 51a-d und Grundbacken 9a-d eine jederzeit zentrische Bewegung bezüglich der einander gegenüberliegenden Grundbacken wie auch eine großzügige Ausgleichsmöglichkeit bezüglich der Relativbewegung benachbarter Grundbacken zueinander. Da alle bewegten Getriebeglieder in horizontaler Richtung bewegt werden und größtenteils als Flachkörper ausgebildet sind (insbesondere die Mitnehmer 37a-d und 51a-d), lässt sich ein in seiner Bauhöhe sehr kompaktes Ausgleichsspannfutter 1 bereitstellen, welches aufgrund sehr kurzer Hebelverhältnisse zudem eine überlegene Kraftübertragung gewährleistet. Der direkte Aufbau der Antriebseinheit mit einer Antriebsspindel zum Einleiten der Kraft in die Mitnehmer 37a-d ermöglicht ferner sowohl einen Spannbetrieb von Handkraft als auch durch motorische Unterstützung.

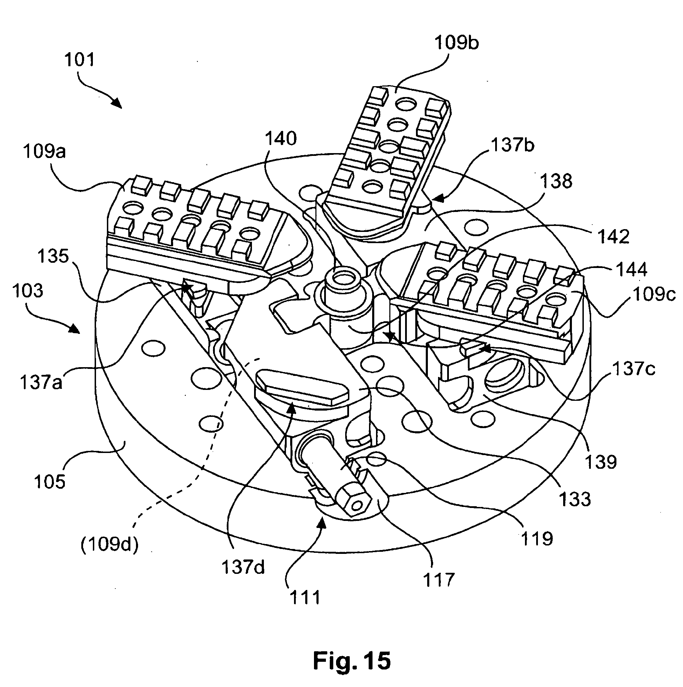

Die Figuren 15 bis 21 widmen sich einem Ausgleichsspannfutter 101 gemäß einem zweiten Ausführungsbeispiel, welches gemäß dem zweiten Aspekt der vorliegenden Erfindung ausgebildet ist. Wesentliche Grundzüge des Ausgleichsspannfutters 101 gemäß dem zweiten bevorzugten Ausführungsbeispiel gleichen bzw. ähneln den Funktionen des vorstehend beschriebenen Ausgleichsspannfutters 1 gemäß dem ersten Ausführungsbeispiel. Funktionale Unterschiede bestehen in der genauen Wirkweise der Antriebseinheit, auf welche sich die folgenden Darstellungen weitestgehend konzentrieren.

Das Ausgleichsspannfutter 101 weist eine Antriebseinheit 111 auf. Die Antriebseinheit 111 ist, vorzugsweise spielfrei, gleitend in einer korrespondierenden Ausnehmung in einem unteren Gehäuseteil 105 eines Gehäuses 103 gelagert. Ein (nicht dargestellter) oberer Gehäuseteil ist zur Aufnahme mehrerer Grundbacken 109a-d eingerichtet. Gemäß Figur 15 sind insgesamt vier Grundbacken 109a-d in Paaren einander gegenüberliegend, zentrisch aufeinander ausgerichtet und in entsprechende Ausnehmungen des Gehäuses eingelassen. Die Grundbacken 109 sind linear gleitend, vorzugweise spielfrei, in dem Gehäuse 103 geführt. Zur Führung dienen wie bei dem Ausgleichsspannfutter 1 gemäß den Figuren 1 bis 14 jeweils parallel ausgebildete Führungsschienen und entsprechende korrespondierende Vorsprünge. Die Grundbacken 109 weisen auf ihrer in Figur 15 nach oben gerichteten Außenfläche jeweils Kopplungsmittel zur Verbindung mit korrespondierend ausgebildeten Spannbacken auf.

Die Antriebseinheit 111 weist eine Antriebsspindel 119 auf, deren Eingriffsabschnitt samt Schlüssel sich durch eine Ausnehmung 117 des unteren Gehäuseteils 105 hindurch erstreckt. Die Antriebsspindel 119 steht mittels eines ersten Gewindeabschnitts mit einem ersten Schlitten 133 in Verbindung, und mittels eines zweiten Gewindeabschnitts mit einem zweiten Schlitten 135. Die Schlitten 133, 135 sind, vorzugsweise spielfrei, gleitend innerhalb des Gehäuses 103 gelagert.

An dem ersten Schlitten 135 ist ein erster Mitnehmer 137a mitsamt eines korrespondierenden Vorsprungs fest angeordnet. An dem zweiten Schlitten 135 ist ein weiterer erster Mitnehmer 137d mit korrespondierendem Vorsprung fest angeordnet. Die Mitnehmer 137a,d sind mittels Antriebs der Antriebsspindel 119 aufeinander zu und voneinander weg bewegbar. Die Mitnehmer 137a,d stehen jeweils mit einer ihnen zugeordneten Grundbacke 109a,d in Eingriff. Zwischen den Mitnehmern 137a,d und Grundbacken 109a,d ist jeweils eine Kulissenführungen ausgebildet, welche die Bewegung der Mitnehmer 137 in eine radiale Bewegung der Grundbacken 109 umsetzt.

Die Ausführungsform des Ausgleichsspannfutters 101 gemäß dem zweiten Ausführungsbeispiel umfasst ferner einen dritten Schlitten 138, und einen vierten Schlitten 139. An dem dritten Schlitten ist ein weiterer Mitnehmer 137b samt eines korrespondieren Vorsprung fest angeordnet. An dem vierten Schlitten 139 ist ein weiterer Mitnehmer 137c samt Vorsprung (korrespondierend) fest angeordnet.

Die Schlitten 133, 138 bzw. die Mitnehmer 137b,d sind einander diametral gegenüberliegend angeordnet, bezogen auf einen im Wesentlichen zentral angeordneten Zapfen 140. Weiterhin sind die Schlitten 135, 139 in analoger Weise mitsamt der Mitnehmer 137a,c einander diametral gegenüberliegend angeordnet, bezogen auf den Zapfen 140.

Die diametral gegenüberliegenden Paare von Mitnehmer 137a,c; 137b,d sind mittels jeweils eines Koppelgliedes 142, 144 miteinander verbunden. Das Koppelglied 142 und das Koppelglied 144 sind jeweils schwenkbar an dem Zapfen 140 gelagert. Hierdurch überführt der Mitnehmer 137b jeweils eine synchrone, in entgegengesetzter Richtung ausgebildete Bewegung zu dem Mitnehmer 137d. Analog vollführt der Mitnehmer 137c immer eine synchrone, entgegengesetzte Bewegung zu der Bewegung des Mitnehmers 137a.

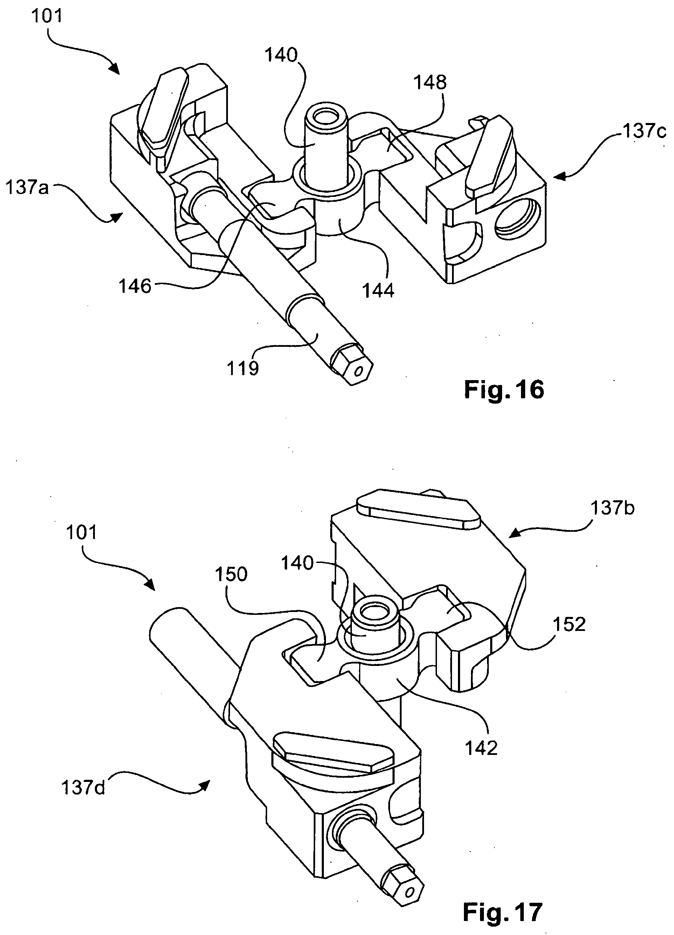

Die Figuren 16 und 17 zeigen Details des Ausgleichsspannfutters gemäß Figur 15. Insbesondere ist zu erkennen, dass die Koppelung der Mitnehmer 137a,c und 137b,d mittels der Koppelglieder 142, 144 realisiert ist. Das Koppelglied 142 weist zwei Zapfen 150, 152 auf, die jeweils in korrespondierender Ausnehmungen der Schlitten bzw. Mitnehmer 137b,d eingreifen. Eine Schwenkbewegung des Koppelglieds 142 führt aufgrund der geführten Beweglichkeit der Mitnehmer 137b,d zu einer linearen Bewegung in entgegengesetzten Richtungen der Mitnehmer 137b,d. Das Gleiche gilt für die Mitnehmer 137a,c, welche durch das Koppelglied 144 miteinander verbunden sind. Das Koppelglied 144 weist zwei Zapfen 146, 148 auf, welche jeweils in korrespondierende Ausnehmungen der Mitnehmer 137a,c eingreifen.

Die Funktionsweise des Ausgleichsspannfutters 101 gemäß dem zweiten Ausführungsbeispiel wird in ähnlicher Weise wie beim ersten Ausführungsbeispiel anhand verschiedener Betriebszustände weiter erläutert.

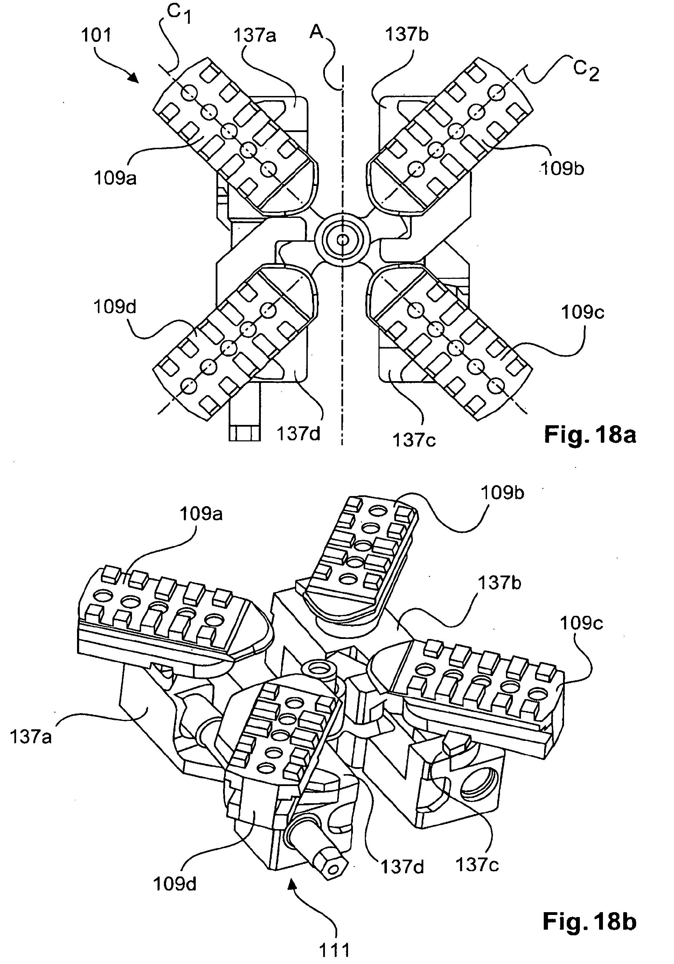

Gemäß Figur 18a,b ist das Ausgleichsspannfutter 101 in einem ersten Betriebszustand abgebildet. In diesem Betriebszustand sind die vier Mitnehmer 137a-d in einer Grundstellung, beispielsweise maximal weit voneinander beabstandet. Die Mitnehmer 137a-d sind in Richtung der Achse A aufeinander zu und voneinander weg bewegbar. Die mit den Mitnehmern 137a-d in Eingriff stehenden Grundbacken 109a-d sind aufgrund des zwischen ihnen ausgebildeten Kulissengetriebes in Richtung der Achsen C1 und C2 jeweils gegenüberliegend aufeinander zu und voneinander weg bewegbar.

Das Bewegen der Mitnehmer 137a,d aufeinander zu mittels Antrieb der Antriebseinrichtung führt zu einem Verschwenken der jeweils in Eingriff stehenden Koppelglieder, wodurch die jeweils gekoppelten Mitnehmer 137c,b synchron mit bewegt werden.

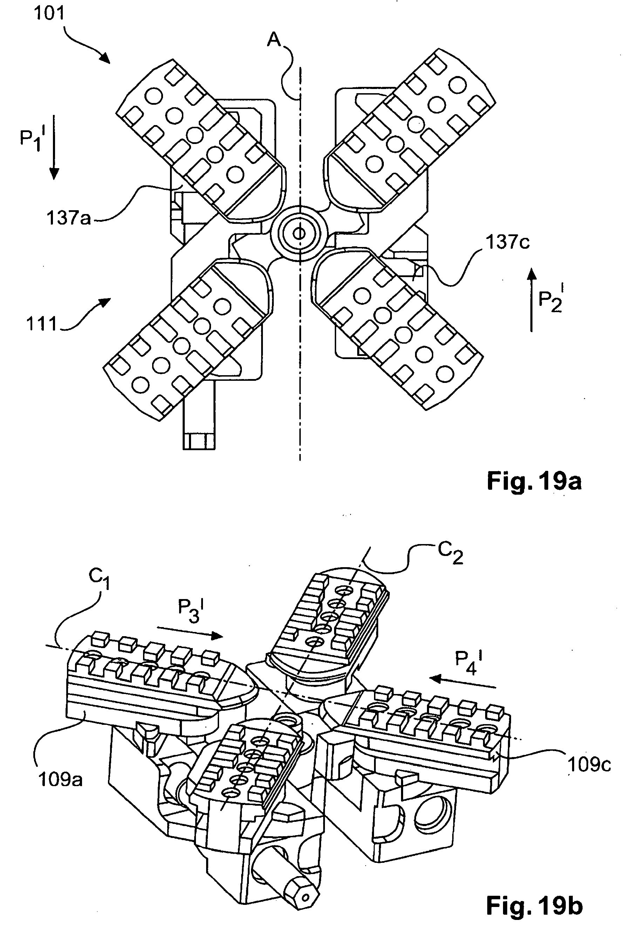

In den Figuren 19a,b ist ein erster Ausgleichsvorgang dargestellt. Gegenüber der in Figuren 18a,b dargestellten Grundposition sind die Mitnehmer 137a,b in Richtung der Pfeile P₁', P₂' ausgelenkt worden. Die übrigen Mitnehmer sind nach wie vor in der Grundposition gemäß Figur 18a,b. Dadurch, dass nur zwei der vier Mitnehmer bewegt worden sind, sind auch nur zwei der Grundbacken bewegt worden, siehe Figur 19b. Die Grundbacken 109a,c sind in Richtung der Pfeile P₃' und P₄' aufeinander zu bewegt. Das Verharren der übrigen Mitnehmer in der Position gemäß Figur 18 wird beispielsweise erreicht, indem einer der Mitnehmer in seiner Position fixiert wird, oder indem die mit den Grundbacken verbundenen Spannbacken bereits das Werkstück erfassen und somit nicht weiter gespannt werden können.

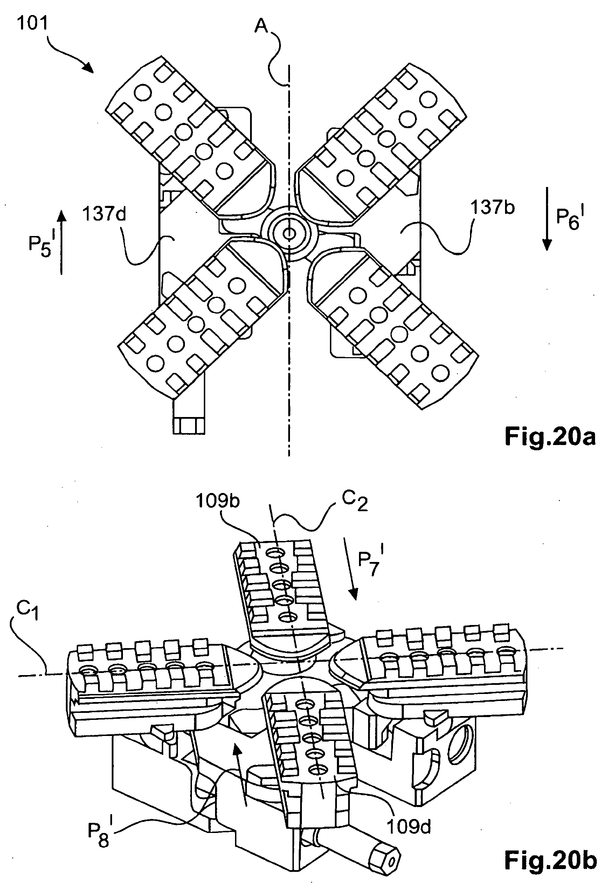

In den Figuren 20a,b ist der zu Figur 19a,b umgekehrte Ausgleichsfall dargestellt. Das Ausgleichsspannfutter 101 ist gegenüber der Grundposition gemäß den Figuren 18a,b dahingehend bewegt worden, dass die Mitnehmer 137b,d bewegt worden sind, während die ihnen benachbarten übrigen Mitnehmer jeweils in der Grundposition geblieben sind. Hierdurch sind folglich gemäß Figur 20b auch nur die Grundbacken 109b,d In Richtung der Pfeile P₇' und P₈' parallel zu der Achse C2 verfahren, während die übrigen Grundbacken und Mitnehmer nicht bewegt worden sind.

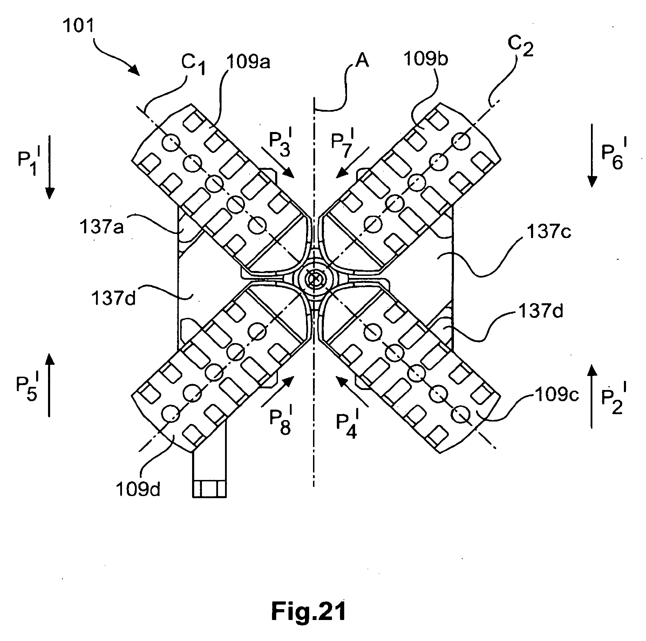

Figur 21 zeigt zusammenfassend die kombinierte Bewegung aller vier Mitnehmer 137a-d in Richtung der jeweils in den vorigen Figuren 19, 20 gezeigten Pfeile von der Grundposition gemäß Figur 18 in die vollständige Schließposition gemäß Figur 21. Die Grundbacken 109a-d sind korrespondierend in Richtung der Pfeile gemäß den Figuren 19, 20 von der Grundposition in die Schließposition verfahren worden.

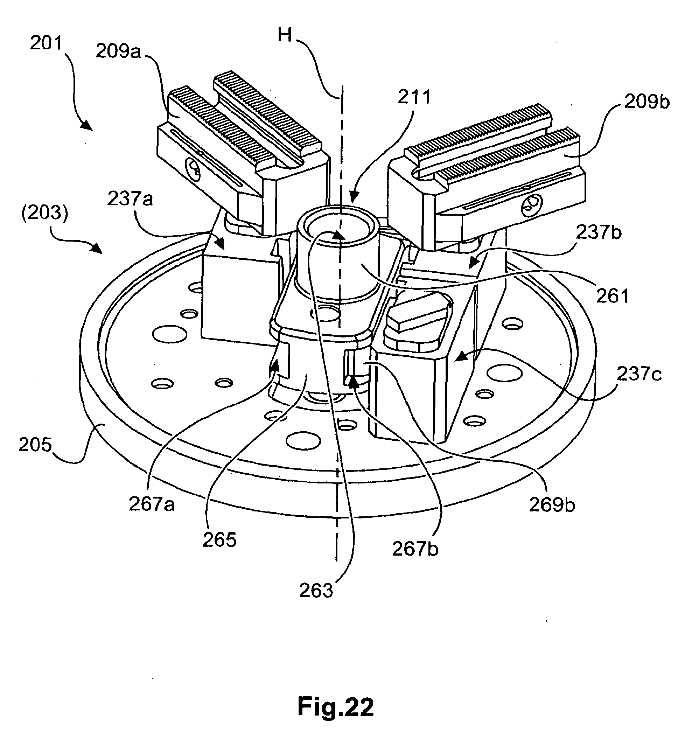

Die Figuren 22 bis 29 zeigen ein drittes Ausführungsbeispiel des erfindungsgemäßen Ausgleichsspannfutters, welches insbesondere für die Kraftspannung weitergebildet ist. Wesentliche Elemente des Aufbaus des Ausgleichsspannfutters sind allerdings ähnlich oder identisch zu den technischen Details aus den Ausgleichsspannfuttern gemäß dem ersten und zweiten Aspekt der Erfindung.

Figur 22 zeigt eine räumliche Darstellung eines teilmontieren Ausgleichsspannfutters 201. Einige Elemente wurden zur besseren Übersichtlichkeit des inneren Aufbaus des Ausgleichsspannfutters ausgeblendet. Das Ausgleichsspannfutter 201 weist ein Gehäuse 203 auf, dessen unterer Gehäuseteil 205 abgebildet ist. In dem Gehäuse 203 sind vier Mitnehmer 237a-d beweglich, vorzugsweise linear geführt beweglich, angeordnet. Die Mitnehmer 237a-d sind vorzugsweise senkrecht zu einer Hubachse H bewegbar.

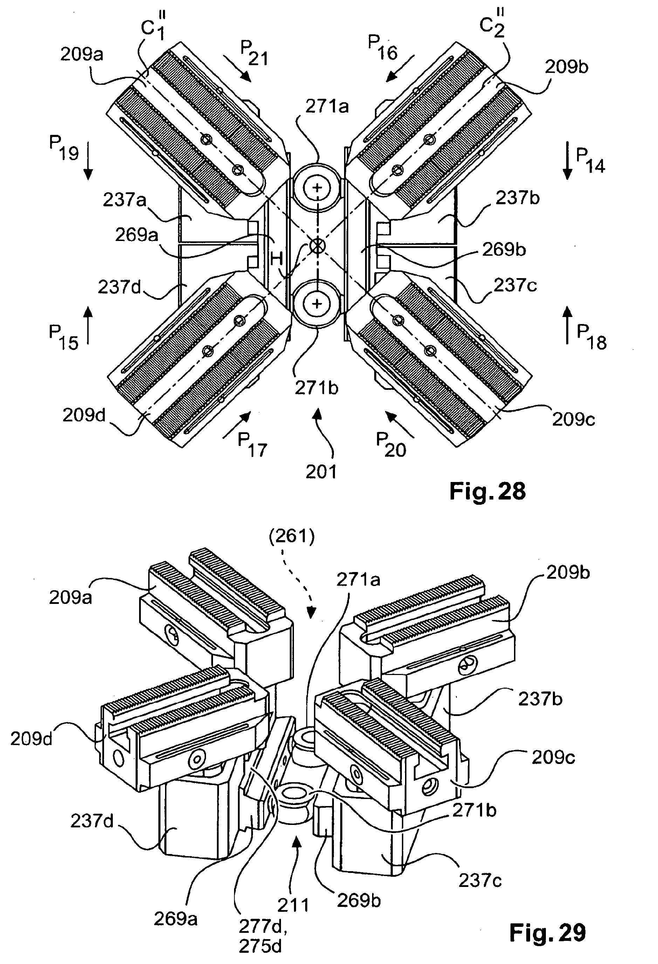

Das Ausgleichsspannfutter 201 weist eine Antriebseinheit 211 auf, die für die Kraftspannung ausgebildet ist. Die Antriebseinheit 211 umfasst einen Antriebskolben 261 mit einem in Figur 22 oberen zylindrischen beziehungsweise hohlzylindrischen Abschnitt, der in dem Gehäuse 203 geführt in Richtung der Hubachse H beweglich ist. Die Antriebseinheit 211 weist ferner einen schulterartig ausgebildeten Grundkörper 265 auf, in dem eine erste Quernut 267a und eine zweite Quernut 267b vorgesehen sind. Die Quernuten 267a, b sind im gezeigten Ausführungsbeispiel quer zur Richtung einer Hubachse H ausgerichtet. In den Quernuten 267a, b ist jeweils ein Gleitstück 269a, 269b aufgenommen (vergleiche Figur 29). Das 269a weist Vorsprünge zum in Eingriff bringen mit korrespondierenden kulissenartigen Ausnehmungen in den Mitnehmern 237a, d (vergleiche Figur 29) auf. In identischer Weise ist das zweite Gleitstück 269b ausgebildet; es weist Vorsprünge auf, die korrespondierend mit kulissenartigen Ausnehmungen 275b, c in den Mitnehmern 237b, c in Eingriff stehen. Über diese Vorsprünge 277a bis d in den kulissenartigen Ausnehmungen 275 a bis d wird eine Bewegung des Antriebskolbens 261 in Richtung der Hubachse H in eine Querbewegung der Mitnehmer 237a-d umgesetzt.

Die Mitnehmer 237a-d stehen über ein Kulissengetriebe in Eingriff mit jeweils einer Grundbacke 209a-d (vergleiche Figur 29). Über das Kulissengetriebe wird die Querbewegung der Mitnehmer 237a-d in eine Radialbewegung der Grundbacken 209 a bis d umgesetzt, die in aus den vorigen Ausführungsbeispielen bekannter Art und Weise geführt in dem Ausgleichsspannfutter aufgenommen sind. Das Kulissengetriebe funktioniert im Wesentlichen wie das bereits im vorigen Ausführungsbeispiel gezeigte Getriebe.

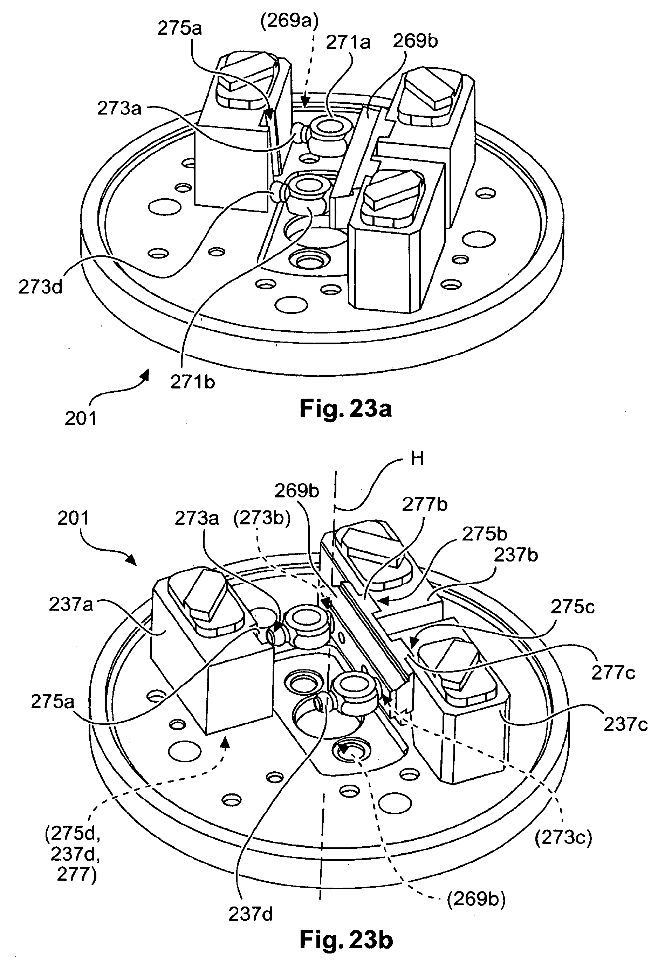

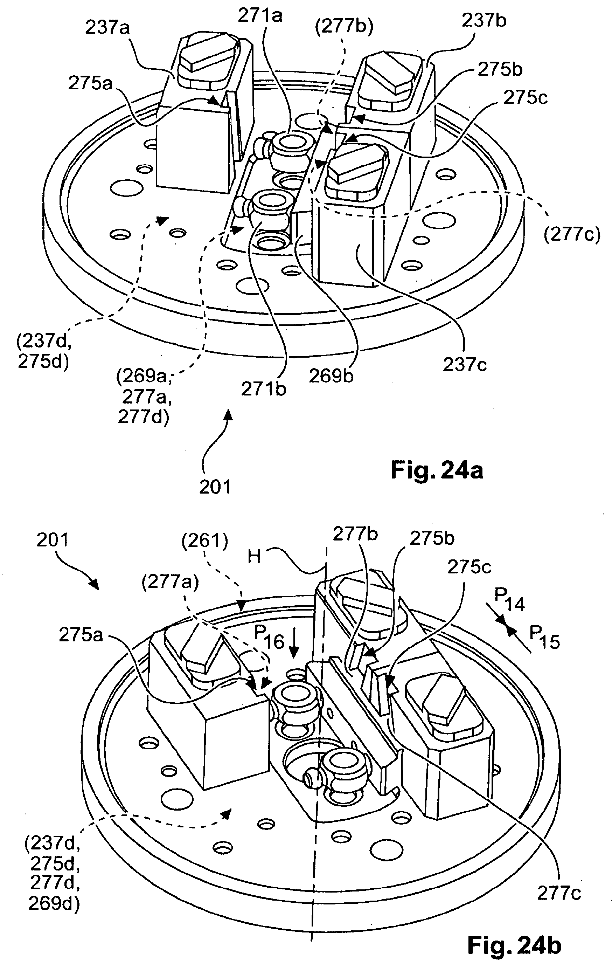

In den folgenden Figuren sind zur besseren Übersichtlichkeit teilweise nicht sämtliche Bezugszeichen in allen Figuren wiederholt. Anhand der Abbildungen sind aber die wiederkehrenden Merkmale ohne Weiteres kenntlich. In Figur 23a ist zusätzlich zu dem Mitnehmer 237d auch der Antriebskolben 261 (vergleiche Figur 22) ausgeblendet. Die Antriebseinheit weist ein erstes Koppelglied 271a und ein zweites Koppelgiled 271b auf. Die Koppelglieder 271a, b sind mittels jeweils zweier Zapfen 273a, b; 273c, d mit den Gleitstücken 269a, b verbunden. Die Koppelglieder 271 a, b sind derart ausgebildet, dass eine Bewegung des Gleitstücks 269a in eine erste Richtung eine synchron gegenläufige Bewegung des zweiten Gleitstücks 269b bewirkt und umgekehrt. In den Figuren 23a, b ist das im Teil eingeblendete Ausgleichsspannfutter 201 in einer ersten, maximal geöffneten Betriebsstellung gezeigt. Die Gleitstücke befinden sich in Richtung der Hubachse H in einer oberen Endstellung. Aufgrund der kulissenartigen Ausnehmungen 275a-d sind die Mitnehmer 237a, d und die Mitnehmer 237 b, c jeweils maximal weit voneinander beabstandet. Wird der Antriebskolben 261 (vergleiche Figur 22) nun in Richtung der Hubachse H bewegt (in der in Figuren 22 gezeigten Ausrichtung nach unten), ergibt sich ein Bild gemäß Figuren 24a, b. Der Weg, den der Antriebskolben 261 ausgehend von Figuren 23a, b hin zum Zustand gemäß Figuren 24a, b zurücklegt, ist durch Pfeil P16 angedeutet. Die Mitnehmer 237a, d beziehungsweise 237 b, c sind in Richtung der Pfeile P14, P15 aneinander angenähert worden. Dies wird erzielt durch die zur Hubachse H schräg verlaufenden kulissenartigen Ausnehmungen 275a-d.

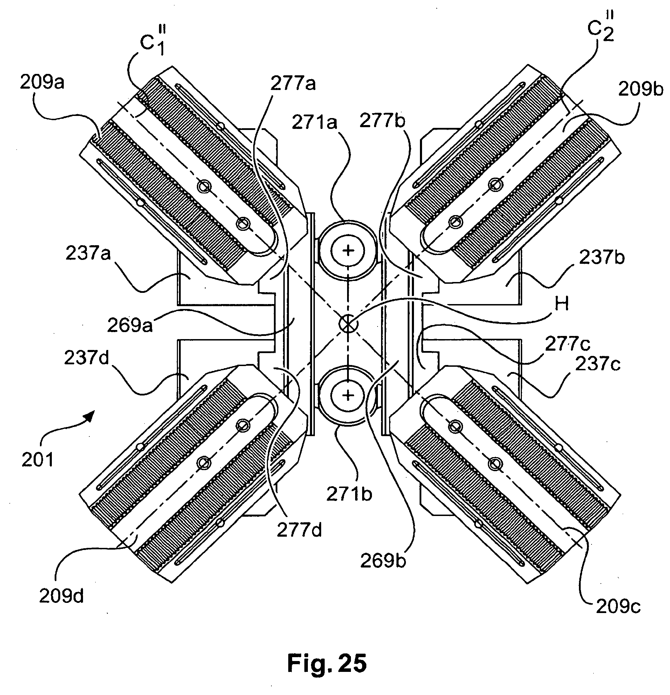

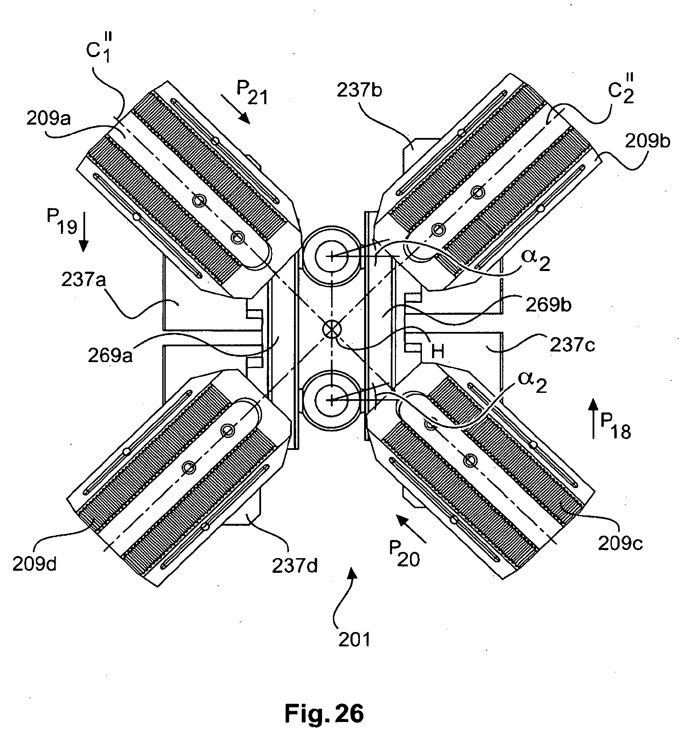

Das Zusammenspiel zwischen der Bewegung der Mitnehmer 237a bis d und der damit gekoppelten Spannbewegung der Grundbacken 209a-d ist zu den Figuren 25 bis 28 erneut dargestellt. In Figur 25 ist zunächst der Zustand gemäß Figuren 23a-d abgebildet. Die Mitnehmer 237a bis d sind aufgrund der Position der Gleitstücke 269a, b in ihrer in Richtung der Hubachse H oberen Endposition maximal weit voneinander entfernt. Aufgrund dieser ersten Endposition befinden sich auch die über das Kulissengetriebe mit den Mitnehmern 237a bis d gekoppelten Grundbacken 209a-d in ihrer korrespondieren ersten, äußeren Endposition. Die Grundbacken 209a, c sind In Richtung der Radialachse C1" beweglich geführt, während die-Grundbacken 209 b, d in Richtung der Radialachse C2" radial beweglich geführt sind. Im Vergleich zu dem Zustand gemäß Figur 25 sind in Zustand gemäß Figur 26 die beiden Grundbacken 209b, d blockiert, beispielsweise durch Erfassen des Werkstücks. Ein vom Zeitpunkt des Erfassens aus fortgesetztes Antreiben des Antriebskolbens 261 (vergleiche Figur 22) führt dazu, dass die Gleitstücke 269a, b gegenläufig quer zur Richtung der Hubachse H ausweichen. Dies wird bewirkt durch ein Entlanggleiten in den kulissenartigen Ausnehmungen der ebenfalls blockierten Mitnehmer 237b, d. Im Gegenzug werden aufgrund dieser Ausgleichsbewegung, die von einer Schwenkbewegung der Zapfen 271a, b um den Winkel α2 gesteuert wird, die Mitnehmer 237a, c in Richtung der Pfeile P18, P19 weiter aufeinander zubewegt. Dementsprechend werden auch die Grundbacken 209a, c im Vergleich zu den blockierten Grundbacken 209b, d weiter aufeinander zubewegt in Richtung der Pfeile P21, P20, um ein ausgleichendes Erfassen des Werkstücks zu ermöglichen.

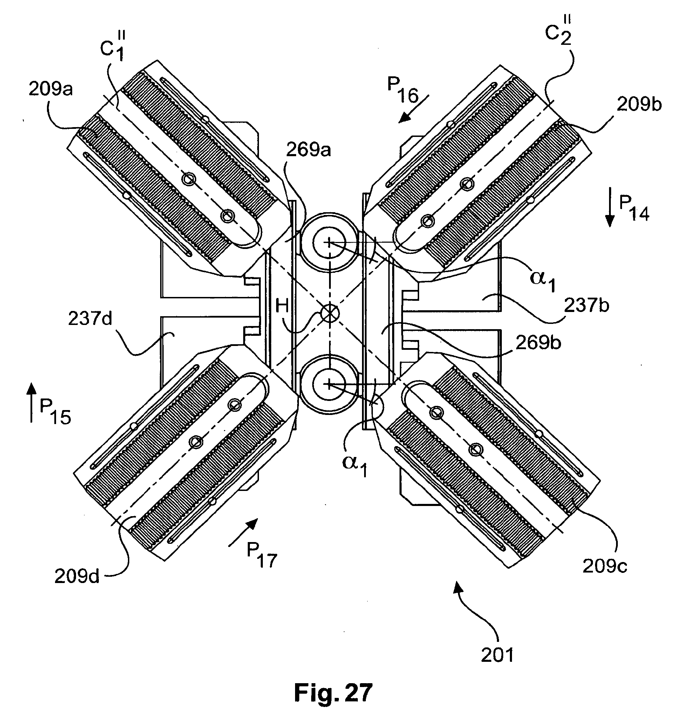

In Figur 27 ist der entgegengesetzte Ausgleichsfall abgebildet. In analoger Weise zum Zustand gemäß Figur 26 hat aufgrund des Blockierens von zweien der Mitnehmer eine Ausgleichsbewegung der Gleitstücke 269a, b stattgefunden. Aufgrund Verschwenkens der Zapfen 271a, b um den Winkel α1 und der vorgenannten Ausgleichsbewegung der Gleitstücke 269a, b sind die nicht blockierten Mitnehmer 237b, c in Richtung der Pfeile P14, P15 aufeinander zubewegt, was zu einer Annäherungsbewegung der Grundbacken 209b, d in Richtung der Pfeile P16, P17 relativ zu den blockierten Grundbacken 209a, c geführt hat.

Schließlich ist in Figur 28 der Betriebszustand des Ausgleichsspannfutters gezeigt, in welchem das Ausgleichsspannfutter 201 vollständig geschlossen ist.

Die Zapfen 271a, b befinden sich in ihrer neutralen Stellung, wie auch in Figur 25. Die Gleitstücke 269a, b sind demzufolge ebenfalls in einer neutralen Stellung angeordnet. Die Mitnehmer 237a, d sind maximal aneinander angenähert, wie auch die Mitnehmer 237b, c. Als Folge davon sind auch die Grundbacken 209a, c und 209b, d maximal aneinander angenähert.

## Patentansprüche

1. Ausgleichsspannfutter (1, 101, 201) zum zentrischen Einspannen von Werkstücken, mit
- einem Gehäuse (3, 103, 203) mit
- zwei Paaren von einander diametral gegenüberliegenden Grundbacken (9a,d; 9b,c; 109a,d; 109b,c; 209a,d; 209b,c) zur Aufnahme korrespondierender Spannbacken, und
- einem Getriebe zum, vorzugsweise radialen, Bewegen der Grundbacken (9a-d, 109a-d, 209a-d) aufeinander zu und voneinander weg, wobei das Getriebe eine Antriebseinheit (11, 111, 211) mit zwei Paaren von antreibbaren Mitnehmern (37a,d; 37b,c; 137a,d; 137b,c, 237a,d; 237b,c) aufweist, wobei die Mitnehmer
- in dem Gehäuse (3, 103, 203), vorzugsweise gleitend, beweglich gelagert sind, **dadurch gekennzeichnet, dass** die Mitnehmer jeweils paarweise (37a,d; 37b,c; 137a,d; 137b,c; 237a,d; 237b,c) aufeinander zu und voneinander weg bewegbar sind, und
- mit jeweils einer der Grundbacken (9, 109, 209) gekoppelt, und die Antriebseinheit und die Grundbacken derart konfiguriert sind, dass eine Relativbewegung der Mitnehmer (37a,d; 37b,c; 137a,d; 137b,c; 237a,d; 237b,c) jeweils eines Paares mit gleichen Bewegungsanteilen zueinander eine synchrone Bewegung benachbarter Grundbacken (9a,d; 9b,c; 109a,d; 109b,c; 209a,d; 209b,c) hervorruft, und
dass sowohl eine Relativbewegung der Mitnehmer (37a,d; 37b,c; 137a,d; 137b,c; 237a,d; 237b,c) zueinander mit jeweils ungleichen Bewegungsanteilen, als auch eine synchrone Bewegung der benachbarten Mitnehmer (37a,d; 37b,c; 137a,d; 137b,c; 237a,d; 237b,c) in gleicher Richtung, jeweils eine Relativbewegung benachbarter Grundbacken (9a,d; 9b,c; 109a,d; 109b,c; 209a,d; 209b,c) zueinander hervorruft.

2. Ausgleichspannfutter (1) nach Anspruch 1,
wobei diejenigen Mitnehmer (37a,c; 37b,d), welche jeweils diametral gegenüberliegenden Grundbacken (9a,c; 9b,d) zugeordnet sind, jeweils relativ zueinander starr sind.

3. Ausgleichsspannfutter (1,101,201) nach Anspruch 1 oder 2,
wobei das Getriebe ein mit der Antriebseinheit (11, 111, 211) gekoppeltes Kulissengetriebe aufweist.

4. Ausgleichsspannfutter (1, 101, 201) nach einem der vorstehenden Ansprüche, wobei die Mitnehmer (37, 137, 237) in einer ersten horizontalen Ebene parallel zu einer ersten Achse (A) bewegbar sind, und die Grundbacken (9, 109, 209) in einer zu der ersten Ebene parallelen Grundbackenebene bewegbar sind.

5. Ausgleichsspannfutter (1, 101) nach einem der vorstehenden Ansprüche,
wobei die Antriebseinheit (11, 111) eine Antriebsspindel (19, 119) und zwei mit der Antriebsspindel (19, 119) mittels eines korrespondierenden Gewindes in Eingriff stehende Schlitten (33, 35; 133, 135) aufweist.

6. Ausgleichsspannfutter (1, 101) nach Anspruch 5,
wobei die Antriebsspindel (19, 119) und der erste Schlitten (33, 133) im Bereich ihres Eingriffs eine erste Gewindesteigung aufweisen, und wobei die Antriebsspindel (19, 119) und der zweite Schlitten (35, 135) im Bereich ihres Eingriffs eine von der ersten Gewindesteigung verschiedene, vorzugsweise der ersten Gewindesteigung entgegengesetzte zweite Gewindesteigung aufweisen.

7. Ausgleichsspannfutter nach einem der Ansprüche 2 bis 6,
wobei ein erstes Paar zueinander starrer erster Mitnehmer (37a,c) fest an dem ersten Schlitten (33) angeordnet ist, und ein zweites Paar der ersten Mitnehmer (37b,d) fest an dem zweiten Schlitten (35) angeordnet ist.

8. Ausgleichsspannfutter (1,101,201) nach einem der vorstehenden Ansprüche, wobei die ersten Mitnehmer (37, 137, 237), vorzugsweise mittels an den Mitnehmern (37, 137) vorgesehener Führungsmittel (41), in dem Gehäuse (3, 103, 203), vorzugsweise gleitend, beweglich gelagert sind.

9. Ausgleichsspannfutter nach einem der Ansprüche 1, 3, 4, 6 oder 8,
wobei diejenigen Mitnehmer (137a,c; 137b,d; 237a,c; 237b,d), welche jeweils diametral gegenüberliegenden Grundbacken (9, 109a,c; 109b,d; 209a,c; 209b,d) zugeordnet sind, jeweils in entgegengesetzter Richtung synchron zueinander bewegbar sind.

10. Ausgleichsspannfutter nach Anspruch 9,
wobei jeweils einer der Mitnehmer (137, 237) mit einer der Grundbacken (109, 209) derart in Eingriff steht, dass die Bewegung der Mitnehmer unmittelbar in die Bewegung der Grundbacken überführt wird.

11. Ausgleichsspannfutter nach einem der Ansprüche 9 oder 10,
wobei die Grundbacken (109, 209) jeweils eine Kulisse aufweisen, in welcher ein korrespondierender Vorsprung eines der Mitnehmer (137, 237), vorzugsweise spielfrei, geführt wird.

12. Ausgleichsspannfutter nach einem der Ansprüche 9 bis 11,
wobei die Antriebseinheit (111) für jeden Mitnehmer (137a-d; 237a-d) einen separaten Schlitten (133, 135, 138, 139; 233, 235, 238, 239) aufweist, und jeder der Mitnehmer fest an dem jeweiligen Schlitten angeordnet ist.

13. Ausgleichsspannfutter nach Anspruch 12,
wobei die Antriebsspindel (119) mit zwei der vier Schlitten (133, 135) in Eingriff steht, und die beiden übrigen Schlitten (138, 139) mittels der paarweisen Koppelung der Mitnehmer (137a,c; 137b,d) antreibbar sind.

14. Ausgleichsspannfutter (201) nach einem der Ansprüche 1, 3, 4, 8 oder 9 bis 12, wobei die Antriebseinheit (211) einen Futterkolben (261) aufweist, der zum Anschluss an eine Kraftspanneinheit einer Werkzeugmaschine ausgebildet ist.

15. Ausgleichsspannfutter (201) nach Anspruch 14,
wobei der Futterkolben (261) in Richtung einer Hubachse (H) beweglich ist, vorzugsweise geführt, und wobei die Antriebseinheit (211) ein erstes und zweites Gleitstück (269a,b) aufweist, welche jeweils in einem Winkel, vorzugsweise senkrecht, zu der Hubachse (H) beweglich sind, vorzugsweise in korrespondierenden Ausnehmungen (267a,b) des Futterkolbens (261) geführt.

16. Ausgleichsspannfutter (201) nach Anspruch 15,
wobei die Gleitstücke (269a,b) derart mit den Mitnehmern (237a-d) gekoppelt sind, dass eine Bewegung des Futterkolbens (261) in Richtung der Achse (H) in einer Bewegung von zwei diametral gegenüberliegenden Mitnehmern (237a,d; 237b,c) oder allen Mitnehmern (237a-d) führt.

17. Ausgleichsspannfutter (201) nach Anspruch 15 oder 16,
wobei die Gleitstücke (269a,b) jeweils Vorsprünge aufweisen, die kulissenartig derart mit den Mitnehmern (237a-d) gekoppelt sind, dass eine Bewegung des jeweiligen Gleitstücks (269a; 269b) in Richtung der Hubachse (H) eine Relativbewegung der mit dem Gleitstück gekoppelten Mitnehmer (237a,d; 237b,c) senkrecht zu der Hubachse (H) bewirkt.

18. Ausgleichsspannfutter (201) nach einem der Ansprüche 15 bis 17,
wobei die Gleitstücke (269a,b) bezogen auf die Hubachse (H) einander diametral gegenüberliegend angeordnet, mittels eines oder mehrerer Koppelglieder (271a,b) verbunden und in entgegengesetzter Richtung synchron zueinander sind.

## Claims

1. A compensating chuck (1, 101, 201) for concentrically clamping workpieces, comprising
- a housing (3, 103, 203),
- two pairs of mutually diametrally opposed main jaws (9a, d; 9b, 9c; 109a, d; 109b, c; 209a, d; 209b, c) for receiving corresponding clamping jaws, and
- a transmission for preferably radially moving the main jaws (9a-d, 109a-d, 209a-d) towards and away from each other, wherein the transmission has a drive unit (11, 111, 211) having two pairs of drivable entrainment members (37a, d; 37b, c; 137a, d; 137b, c; 237a, d; 237b, c), wherein the entrainment members
- are mounted movably, preferably slidingly, in the housing (3, 103, 203),
**characterised in that** the entrainment members are respectively movable towards and away from each other in paired relationship (37a, d; 37b, c; 137a, d; 137b, c; 237a, d; 237b, c), and
- are coupled to a respective one of the main jaws (9, 109, 209) and the drive unit and the main jaws are so configured that a relative movement of the entrainment members (37a, d; 37b, c; 137a, d; 137b, c; 237a, d; 237b, c), of a respective pair with the same movement components relative to each other causes a synchronous movement of adjacent main jaws (9a, d; 9b, 9c; 109a, d; 109b, c; 209a, d; 209b, c) and that both a relative movement of the entrainment members (37a, d; 37b, c; 137a, d; 137b, c; 237a, d; 237b, c) relative to each other with respectively different movement components and also a synchronous movement of the adjacent entrainment members (37a, d; 37b, c; 137a, d; 137b, c; 237a, d; 237b, c) in the same direction respectively causes a relative movement of adjacent main jaws (9a, d; 9b, 9c; 109a, d; 109b, c; 209a, d; 209b, c) relative to each other.

2. A compensating chuck (1) according to claim 1 wherein those entrainment members (37a, c; 37b, d) which are respectively associated with diametrally opposite main jaws (9a, c; 9b, d) are respectively rigid relative to each other.

3. A compensating chuck (1, 101, 201) according to claim 1 or claim 2 wherein the transmission has a sliding guide transmission coupled to the drive unit (11, 111, 211).

4. A compensating chuck (1, 101, 201) according to one of the preceding claims wherein the entrainment members (37, 137, 237) are movable in a first horizontal plane parallel to a first axis (A) and the main jaws (9, 109, 209) are movable in a main jaw plane parallel to the first plane.

5. A compensating chuck (1, 101) according to one of the preceding claims wherein the drive unit (11, 111) has a drive spindle (19, 119) and two slides (33, 35; 133, 135) in engagement with the drive spindle (19, 119) by means of a corresponding thread.

6. A compensating chuck (1, 101) according to claim 5 wherein the drive spindle (19, 119) and the first slide (33, 133) have a first thread pitch in the region of their engagement and wherein the drive spindle (19, 119) and the second slide (35, 135) have in the region of their engagement a second thread pitch which is different from the first thread pitch and which is preferably in opposite relationship to the first thread pitch.

7. A compensating chuck according to one of claims 2 to 6 wherein a first pair of mutually rigid first entrainment members (37a, c) is arranged fixedly on the first slide (33) and a second pair of the first entrainment members (37b, d) is arranged fixedly on the second slide (35).

8. A compensating chuck (1, 101, 201) according to one of the preceding claims wherein the first entrainment members (37, 137, 137) are mounted movably, preferably slidingly, in the housing (3, 103, 203), preferably by means of guide means (41) provided on the entrainment members (37, 137).

9. A compensating chuck according to one of claims 1, 3, 4, 6 or 8 wherein those entrainment members (137a, c; 137b, d; 237a, c; 237b, d) which are respectively associated with diametrally opposite main jaws (9, 109a, c; 109b, d; 209a, c; 209b, d) are respectively movable in opposite directions synchronously relative to each other.

10. A compensating chuck according to claim 9 wherein a respective one of the entrainment members (137, 137) is in engagement with one of the main jaws (109, 209) in such a way that the movement of the entrainment members is directly converted into the movement of the main jaws.

11. A compensating chuck according to one of claims 9 and 10 wherein the main jaws (109, 209) respectively have a sliding guide in which a corresponding projection of one of the entrainment members (137, 237) is guided, preferably without play.

12. A compensating chuck according to one of claims 9 to 11 wherein the drive unit (111) for each entrainment member (137a-d; 237a-d) has a separate slide (133, 135, 138, 139; 233, 235, 238, 239) and each of the entrainment members is arranged fixedly on the respective slide.

13. A compensating chuck according to claim 12 wherein the drive spindle (119) is in engagement with two of the four slides (133, 135) and the other two slides (138, 139) are drivable by means of the paired coupling of the entrainment members (137a, c; 137b, d).

14. A compensating chuck (201) according to one of claims 1, 3, 4, 8 or 9 to 12 wherein the drive unit (211) has a chuck piston (261) adapted for connection to a power clamping unit of a machine tool.

15. A compensating chuck (201) according to claim 14 wherein the chuck piston (261) is movable in the direction of a stroke axis (H), preferably being guided there, and wherein the drive unit (211) has a first and a second sliding portion (269a, b) which are respectively movable at an angle, preferably perpendicularly, to the stroke axis (H), preferably guided in corresponding openings (267a, b) of the chuck piston (261).

16. A compensating chuck (201) according to claim 15 wherein the sliding portions (269a, b) are so coupled to the entrainment members (237a-d) that a movement of the chuck piston (261) in the direction of the axis (H) leads to a movement of two diametrally opposite entrainment members (237a, d; 237b, c) or all entrainment members (237a-d).

17. A compensating chuck (201) according to claim 15 or claim 16 wherein the sliding portions (269a, b) respectively have projections which are coupled in sliding guide relationship with the entrainment members (237a-d) in such a way that a movement of the respective sliding portion (269a; 269b) in the direction of the stroke axis (H) causes a relative movement of the entrainment members (237a, d; 237b, c) coupled to the sliding portion perpendicularly to the stroke axis (H).

18. A compensating chuck (201) according to one of claims 15 to 17 wherein the sliding portions (269a, b) are arranged in mutually diametrally opposite relationship with respect to the stroke axis (H), are connected by means of one or more coupling members (271 a, b) and are synchronous relative to each other in opposite directions.

## Revendications

1. Mandrin de serrage à compensation (1, 101, 201) pour le serrage centré de pièces avec
- un boîtier (3, 103, 203) avec
- deux paires de mâchoires de base (9a,d ; 9b,c ; 109a,d ; 109b,c ; 209a,d ; 209b,c) diamétralement opposées l'une à l'autre pour la réception de mâchoires de serrage correspondantes et
- un engrenage pour le déplacement de préférence radial des mâchoires de base (9a-d, 109a-d, 209a-d) les unes vers les autres et loin les unes des autres,
l'engrenage présentant une unité d'entraînement (11, 111, 211) avec deux paires d'entraîneurs entraînables (37a,d ; 37b,c ; 137a,d ; 137b,c, 237a,d ; 237b,c), les entraîneurs
- étant logés de manière mobile, de préférence par glissement, dans le boîtier (3, 103, 203),
**caractérisé en ce que** les entraîneurs sont mobiles les uns vers les autres et loin les uns des autres respectivement par paire (37a,d ; 37b,c ; 137a,d ; 137b,c ; 237a,d ; 237b,c) et
- sont couplés à respectivement l'une des mâchoires de base (9, 109, 209), et l'unité d'entraînement et les mâchoires de base étant configurées de telle manière qu'un mouvement relatif des entraîneurs (37a,d ; 37b,c ; 137a,d ; 137b,c ; 237a,d ; 237b,c) respectivement d'une paire avec des parts de mouvement identiques les unes par rapport aux autres suscite un mouvement synchrone des mâchoires de base contiguës (9a,d ; 9b,c ; 109a,d ; 109b,c ; 209a,d ; 209b,c) et
**en ce que** non seulement un mouvement relatif des entraîneurs (37a,d ; 37b,c ; 137a,d ; 137b,c ; 237a,d ; 237b,c) les uns par rapport aux autres avec des parts de mouvement respectivement non identiques mais aussi un mouvement synchrone des entraîneurs contigus (37a,d ; 37b,c ; 137a,d ; 137b,c ; 237a,d ; 237b,c) dans la même direction suscitent respectivement un mouvement relatif des mâchoires de base contiguës (9a,d ; 9b,c ; 109a, d ; 109b,c ; 209a, d ; 209b,c) les unes par rapport aux autres.

2. Mandrin de serrage à compensation (1) selon la revendication 1,
les entraîneurs (37a,c ; 37b,d) qui sont associés respectivement aux mâchoires de base diamétralement opposées (9a,c ; 9b,d) étant respectivement relativement rigides les uns par rapport aux autres.

3. Mandrin de serrage à compensation (1, 101, 201) selon la revendication 1 ou 2,
l'engrenage présentant un engrenage coulissant couplé à l'unité d'entraînement (11, 111, 211).

4. Mandrin de serrage à compensation (1, 101, 201) selon l'une quelconque des revendications précédentes,
les entraîneurs (37, 137, 237) étant mobiles dans un premier plan horizontal parallèlement à un premier axe (A), et les mâchoires de base (9, 109, 209) étant mobiles dans un plan de mâchoire de base parallèle au premier plan.

5. Mandrin de serrage à compensation (1, 101) selon l'une quelconque des revendications précédentes,
l'unité d'entraînement (11, 111) présentant une broche d'entraînement (19, 119) et deux chariots (33, 35 ; 133, 135) se tenant en engagement avec la broche d'entraînement (19, 119) à l'aide d'un filet correspondant.

6. Mandrin de serrage à compensation (1, 101) selon la revendication 5,
les broches d'entraînement (19, 119) et le premier chariot (33, 133) présentant, dans la zone de leur engagement, un premier pas de filet et les broches d'entraînement (19, 119) et le second chariot (35, 135) présentant dans la zone de leur engagement, un second pas de filet, inverse de préférence au premier pas de filet, différent du premier pas de filet.

7. Mandrin de serrage à compensation selon l'une quelconque des revendications 2 à 6,
une première paire d'entraîneurs (37a, c) rigides l'un par rapport à l'autre étant agencée fixement sur le premier chariot (33) et une seconde paire des premiers entraîneurs (37b, d) étant disposée fixement sur le second chariot (35).

8. Mandrin de serrage à compensation (1, 101, 201) selon l'une quelconque des revendications précédentes,
les premiers entraîneurs (37, 137, 237) étant logés de manière mobile, de préférence par glissement, de préférence à l'aide de moyens de guidage (41) prévus sur les entraîneurs (37, 137) dans le boîtier (3, 103, 203).

9. Mandrin de serrage à compensation selon l'une quelconque des revendications 1, 3, 4, 6 et 8,
les entraîneurs (137a,c ; 137b,d ; 237a,c ; 237b,d) qui sont associés respectivement aux mâchoires de base (9, 109a,c ; 109b,d ; 209a,c ; 209b,d) diamétralement opposées étant mobiles respectivement de manière synchrone les uns par rapport aux autres dans le sens inverse.

10. Mandrin de serrage à compensation selon la revendication 9,
respectivement l'un des entraîneurs (137, 237) étant en engagement avec l'une des mâchoires de base (109, 209) de telle manière que le mouvement des entraîneurs soit transféré directement en mouvement des mâchoires de base.

11. Mandrin de serrage à compensation selon l'une quelconque des revendications 9 et 10,
les mâchoires de base (109, 209) présentant respectivement une coulisse, dans laquelle une saillie correspondante de l'un des entraîneurs (137, 237) est guidée de préférence sans jeu.

12. Mandrin de serrage à compensation selon l'une quelconque des revendications 9 à 11,
l'unité d'entraînement (111) pour chaque entraîneur (137a-d ; 237a-d) présentant un chariot séparé (133, 135, 138, 139 ; 233, 235 ; 238 ; 239) et chacun des entraîneurs étant disposé fixement sur le chariot concerné.

13. Mandrin de serrage à compensation selon la revendication 12,
les broches d'entraînement (119) étant en engagement avec deux des quatre chariots (133, 135) et les deux chariots restants (138, 139) étant entraînables à l'aide du couplage par paire des entraîneurs (137a,c ; 137b,d).

14. Mandrin de serrage à compensation (201) selon l'une quelconque des revendications 1, 3, 4, 8 et 9 à 12,
l'unité d'entraînement (211) présentant un piston de mandrin (261) qui est réalisé pour le raccordement à une unité de serrage à force d'une machine-outil.

15. Mandrin de serrage à compensation selon la revendication 14,
le piston de mandrin (261) étant mobile en direction d'un axe de levage (H), de préférence guidé, et l'unité d'entraînement (211) présentant une première et une seconde pièce de glissement (269a, b) qui sont mobiles respectivement dans un angle, de préférence perpendiculairement à l'axe de levage (H), de préférence guidés dans des évidements correspondants (267a, b) du piston de mandrin (261).

16. Mandrin de serrage à compensation (201) selon la revendication 15,
les pièces de glissement (269a,b) étant couplées aux entraîneurs (237a-d) de telle manière qu'un mouvement du piston de mandrin (261) en direction de l'axe (H) entraîne un mouvement de deux entraîneurs (237a,d ; 237b,c) diamétralement opposés ou de tous les entraîneurs (237a,d).

17. Mandrin de serrage à compensation (201) selon la revendication 15 ou 16,
les pièces de glissement (269a,b) présentant respectivement des saillies qui sont couplées comme une coulisse avec les entraîneurs (237a-d) de telle manière qu'un mouvement de la pièce de glissement concernée (269a ; 269b) en direction de l'axe de levage (H) provoque un mouvement relatif des entraîneurs (237a,d ; 237b,c) couplés à la pièce de glissement perpendiculairement à l'axe de levage (H).

18. Mandrin de serrage à compensation selon l'une quelconque des revendications 15 à 17,
les pièces de glissement (269a, b) étant disposées de manière diamétralement opposée par rapport à l'axe de levage (H), étant reliées à l'aide d'un ou plusieurs organes de couplage (271a,b) et étant synchrones l'une par rapport à l'autre dans le sens inverse.
